(19) Europäisches Patentamt / European Patent Office / Office européen des brevets

(11) **EP 4 130 916 B1**

(12) **EUROPEAN PATENT SPECIFICATION**

(45) Date of publication and mention of the grant of the patent:
**01.01.2025 Bulletin 2025/01**

(21) Application number: **20926976.0**

(22) Date of filing: **25.03.2020**

(51) International Patent Classification (IPC):
**G05D 1/693** (2024.01)    **G05D 1/698** (2024.01)
**G08G 1/16** (2006.01)    G05D 107/70 (2024.01)
G05D 109/10 (2024.01)    G05D 105/28 (2024.01)

(52) Cooperative Patent Classification (CPC):
**G05D 1/693; G05D 1/6987; G08G 1/163;**
G05D 2105/28; G05D 2107/70; G05D 2109/10

(86) International application number:
**PCT/JP2020/013289**

(87) International publication number:
**WO 2021/192081 (30.09.2021 Gazette 2021/39)**

(54) **MOVING BODY CONTROL DEVICE, MOVING BODY CONTROL METHOD, AND COMPUTER-READABLE RECORDING MEDIUM**

STEUERUNGSVORRICHTUNG FÜR BEWEGLICHEN KÖRPER, STEUERUNGSVERFAHREN FÜR BEWEGLICHEN KÖRPER UND COMPUTERLESBARES AUFZEICHNUNGSMEDIUM

DISPOSITIF DE COMMANDE DE CORPS EN MOUVEMENT, PROCÉDÉ DE COMMANDE DE CORPS EN MOUVEMENT, ET SUPPORT D'ENREGISTREMENT LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.02.2023 Bulletin 2023/06**

(73) Proprietor: NEC Corporation
**108-8001 Tokyo (JP)**

(72) Inventor: **NYU, Takayuki**
**Tokyo 108-8001 (JP)**

(74) Representative: **Vossius & Partner**
**Patentanwälte Rechtsanwälte mbB**
**Siebertstraße 3**
**81675 München (DE)**

(56) References cited:
JP-A- 2000 153 905    JP-A- 2009 056 838
JP-A- 2017 117 328    JP-A- 2017 117 328
JP-A- 2018 041 264    JP-A- H10 207 504
US-A1- 2011 295 496    US-A1- 2016 355 184
US-B1- 6 246 932

EP 4 130 916 B1

## Description

TECHNICAL FIELD

The invention relates to a mobile object control apparatus and a mobile object control method for controlling mobile objects, and in particular relates to a computer-readable recording medium on which a program for realizing the apparatus and method is recorded.

BACKGROUND ART

A conveyance system that uses an automated guided vehicle (AGV) improves the work efficiency, the production efficiency, and the like, and thus is introduced in various factories. In addition, automated guided vehicles are also introduced in various logistic facilities to realize work efficiency, prompt delivery, and the like.

Moreover, in conveyance systems, it is necessary to avoid a collision between automated guided vehicles at an intersection at which routes that are set for the respective automated guided vehicles in advance intersect, in order to secure safety.

In view of this, as a related technique, Patent Document 1 discloses an information processing apparatus that causes an automated guided vehicle to make a detour and suppresses a decrease in the moving efficiency of the automated guided vehicle, in order to avoid a collision at an intersection. Moreover, Patent Document 2 discloses a system for safely moving a plurality of automated guided vehicles in an efficient manner without a deadlock being caused by interference between automated guided vehicles.

US 2011/0295496 A1 relates to a method and a system for automatically directing traffic on a site. JP 2017 117328 A relates to a mining machine operation management system.

US 6 246 932 B1 relates to a vehicle monitor for controlling movements of a plurality of vehicles.

LIST OF RELATED ART DOCUMENTS

PATENT DOCUMENT

Patent Document 1: Japanese Patent Laid-Open Publication No. 2018-129028
Patent Document 2: Japanese Patent Laid-Open Publication No. 2006-113687

SUMMARY OF INVENTION

The invention is specified by the independent claims. Preferred embodiments are defined in the dependent claims. In the following description, although numerous features may be designated as optional, it is nevertheless acknowledged that all features comprised in the independent claims are not to be read as optional.

TECHNICAL PROBLEMS

However, regarding automated guided vehicles in Patent Documents 1 and 2, when a plurality of automated guided vehicles enter an intersection at the same time, the automated guided vehicles repeatedly decelerate, stop, start, and accelerate, and thus the loads of the drive motors provided in the automated guided vehicles increase. That is to say, when an automated guided vehicle repeatedly starts from a stop state or stops from an operating state, the current flowing to the drive motor thereof increases.

This is because, when the number of revolutions of the drive motor decreases (nearly a stopped state), the torque increases, and thus the current flowing to the drive motor increases. Therefore, when the current flowing to the drive motor increases, the amount of heat generation of the drive motor increases, and the lubricant of the drive motor deteriorates, thus shortening the lifespan of the drive motor.

An example object of the invention is to provide a mobile object control apparatus, a mobile object control method, and a computer-readable recording medium for performing control so as to extend the lifespan of a mobile object capable of avoiding collisions.

SOLUTION TO THE PROBLEMS

In order to achieve the example object described above, a mobile object control apparatus according to claim 1 is provided.

Also, in order to achieve the example object described above, a mobile object control method according to claim 5 is provided.

Furthermore, in order to achieve the example object described above, a program according to claim 6 is provided.

ADVANTAGEOUS EFFECTS OF THE INVENTION

As described above, according to the invention, it is possible to extend the lifespan of a mobile object capable of avoiding collisions.

BRIEF DESCRIPTION OF THE DRAWINGS

FIG. 1 is a diagram for describing an example of the mobile object control apparatus according to the first example embodiment.
FIG. 2 is a diagram for describing an example of a mobile object control apparatus-based system.
FIG. 3 is a diagram for describing an example of a mobile object-based system.
FIG. 4 shows information indicating an example of movement routes.

FIG. 5 shows information indicating an example of the data structure of the route information.

FIG. 6 shows information indicating an example of the data structure of the mobile object setting information.

FIG. 7 shows information indicating an example of the data structure of the communication delay information.

FIG. 8 shows information indicating an example of the data structure of the in-area mobile object information.

FIG. 9 is a diagram for describing the collision avoidance condition.

FIG. 10 is a diagram showing an example of the data structure of the speed set selection information.

FIG. 11 is a diagram for describing an exemplary operation of the mobile object control apparatus according to the first example embodiment.

FIG. 12 is a diagram showing an example of the data structure of the speed set selection information.

FIG. 13 is a diagram for describing an exemplary operation of the mobile object control apparatus according to the second example embodiment.

FIG. 14 is a diagram for showing an example of a computer that realizes the mobile object control apparatus.

EXAMPLE EMBODIMENT

(First Example Embodiment)

The following describes a first example embodiment of the invention with reference to the drawings. Note that, in the drawings to be described below, the same reference numerals are given to constituent elements that have the same functions or corresponding functions, and a redundant description thereof may be omitted.

[Apparatus configuration]

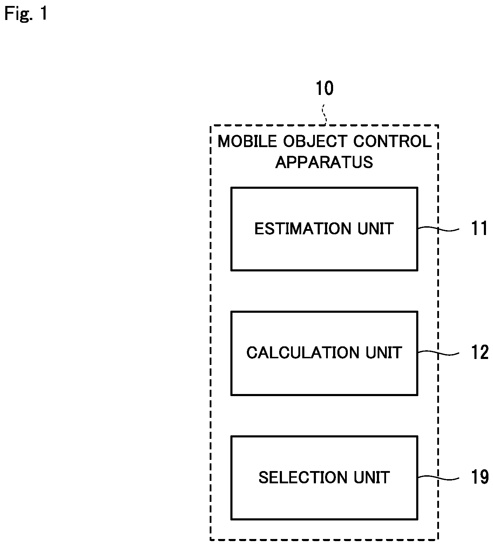

First, the configuration of a mobile object control apparatus 10 according to the first example embodiment will be described with reference to FIG. 1. FIG. 1 is a diagram for describing an example of the mobile object control apparatus according to the first example embodiment.

The mobile object control apparatus 10 shown in FIG. 1 is an apparatus that can extend the lifespan of a mobile object capable of avoiding collision. In addition, as shown in FIG. 1, the mobile object control apparatus 10 includes an estimation unit 11, a calculation unit 12, and a selection unit 19.

Note that, hereinafter, for convenience purposes, a target mobile object 20 (first mobile object) may be referred to as a "mobile object A", and a mobile object 20 that is highly likely to collide with the target mobile object 20 may be referred to as a "mobile object B" (second mobile object).

The estimation unit 11 estimates whether or not the target mobile object A and the mobile object B that is highly likely to collide with the mobile object A will collide with each other at an intersection.

Specifically, the estimation unit 11 calculates a time at which the mobile object A will arrive at an intersection (first arrival time) and a time at which the mobile object B that is highly likely to collide with the target mobile object A will arrive at the intersection (second arrival time), using position information indicating a position, speed information indicating a speed, intersection position information indicating the position of an intersection, and communication delay time information indicating a communication delay time, for each of the target mobile object A and the mobile object B, and estimates whether or not the mobile object A and the mobile object B will collide with each other at the intersection.

If it is estimated that the mobile object A and the mobile object B will collide at the intersection, the calculation unit 12 calculates a speed of the mobile object A and a speed of the mobile object B at which a collision at the intersection is avoidable, based on a collision avoidance condition set in advance.

Specifically, if it is estimated that the mobile object A and the mobile object B will collide at the intersection, the calculation unit 12 calculates a speed of the mobile object A and a speed of the mobile object B (a speed set 1) at which a collision at the intersection is avoidable, based on distance information indicating the path (for example, the distance) from the mobile object A to the mobile object B by way of the intersection, braking distance information indicating the braking distance of the mobile object A, and a collision avoidance condition expressed using the speed information and the communication delay times of the mobile object A and the mobile object B (first calculation means).

Moreover, if it is estimated that the mobile object A and the mobile object B will collide at the intersection, the calculation unit 12 calculates a speed of the mobile object A and a speed of the mobile object B (a speed set 2) at which a collision at the intersection is avoidable, based on the distance information, braking distance information indicating the braking distance of the mobile object B, and a collision avoidance condition expressed using the speed information and the communication delay times of the mobile object A and the mobile object B (second calculation means).

Here, the path from the mobile object A to the mobile object B via the intersection is a length obtained by adding a path from the mobile object A to the intersection and a path from the mobile object B to the intersection.

The selection unit 19 selects the speed of the mobile object A and the speed of the mobile object B calculated by the calculation unit 12, based on one of or both the surrounding temperatures of the drive motors of the mobile object A and the mobile object B and the carrying capacities of the mobile object A and the mobile object B. That is to say, the selection unit 19 selects the speed set 1 or the speed set 2.

Specifically, if the surrounding temperature of the drive motor of the mobile object A or the mobile object B is higher than or equal to a threshold Th1 (first threshold) for determining a temperature set in advance, the selection unit 19 selects speeds calculated by the calculation unit 12, based on the magnitude relationship between the surrounding temperatures of the drive motors of the mobile object A and the mobile object B.

Moreover, if the surrounding temperatures of the drive motors of the mobile object A and the mobile object B are lower than the threshold Th1 (are not higher than or equal to the threshold Th1), the selection unit 19 selects speeds calculated by the calculation unit 12, based on the magnitude relationship between the carrying capacities of the mobile object A and the mobile object B.

In the first example embodiment, the speeds of mobile objects are changed to speeds that prioritize the lifespans thereof based on the surrounding temperatures of the drive motors of the mobile objects, and thus the lifespans of the mobile objects can be extended.

Moreover, in the first example embodiment, the speeds of mobile objects are changed to speeds that prioritize the carrying efficiencies thereof based on the carrying capacities of the mobile objects, and thus it is possible to suppress a decrease in the carrying efficiencies of the mobile objects.

Furthermore, in the first example embodiment, even if communication delay occurs due to a decrease in the communication quality, the speeds of the mobile objects can be changed to speeds that prioritize the lifespans thereof or speeds that prioritize the carrying efficiencies thereof in consideration of the communication delay times of the mobile objects, and thus it is possible to avoid a collision between the mobile objects.

[System configuration]

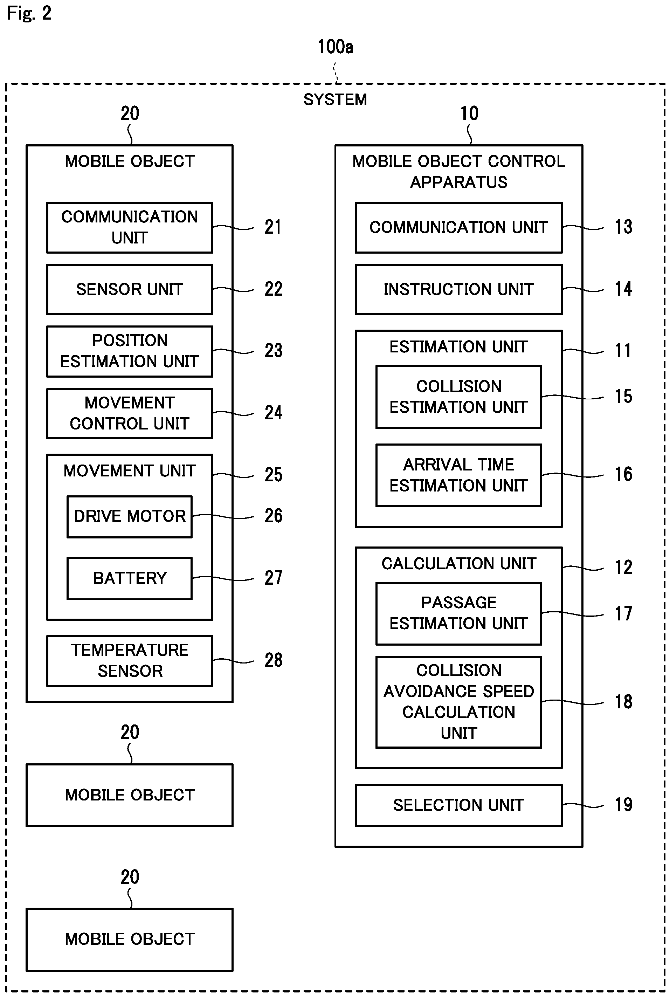

FIG. 2 is a diagram for describing an example of a mobile object control apparatus-based system. A system 100a shown in FIG. 2 includes the mobile object control apparatus 10 and a plurality of mobile objects 20. The system 100a also includes a storage unit (not illustrated in FIG. 2).

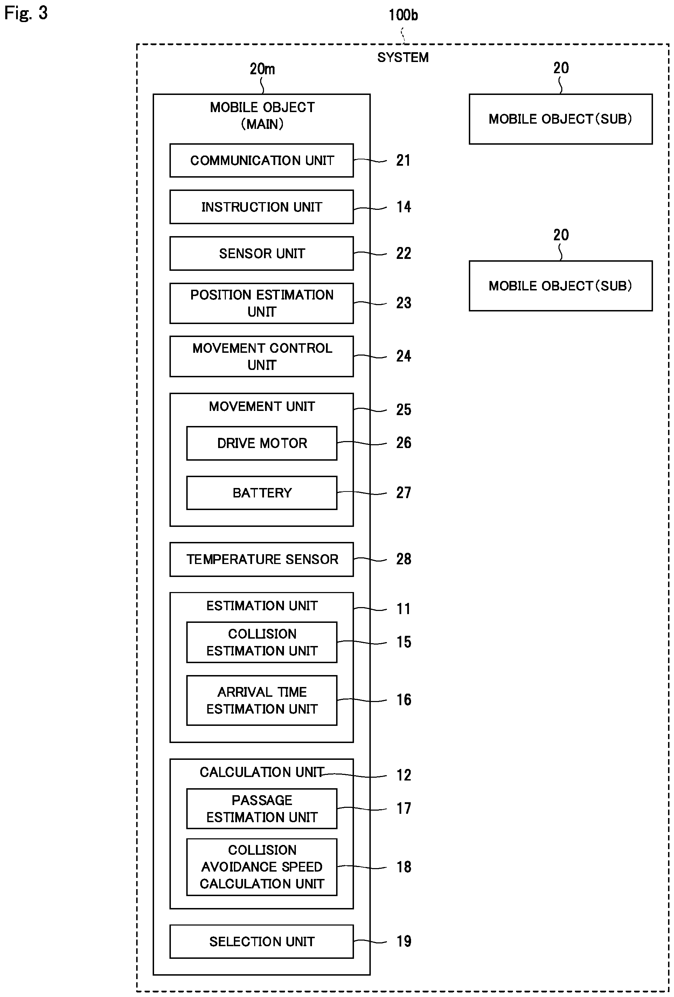

Note that the system may have a configuration in which a mobile object 20 is the main element, such as a system 100b shown in FIG. 3. FIG. 3 is a diagram for describing an example of a mobile object-based system.

Note that the configuration of the system is not limited to those of the systems 100a and 100b, and a configuration other than those of the systems 100a and 100b may also be adopted. Note that the system will be described below using the system 100a in FIG. 2 for convenience purposes.

The mobile object control apparatus 10 performs, on each of the mobile objects 20, control for moving the mobile object 20 to a target location.

The mobile object control apparatus 10 includes the estimation unit 11, the calculation unit 12, the selection unit 19, a communication unit 13, and an instruction unit 14. The estimation unit 11 includes a collision estimation unit 15 and an arrival time estimation unit 16. The calculation unit 12 includes a passage estimation unit 17 and a collision avoidance speed calculation unit 18.

Note that the mobile object control apparatus 10 is an information processing apparatus such as a server computer.

Each mobile object 20 obtains, from the mobile object control apparatus 10, instruction information to be used for performing moving control of the mobile object 20, and moves to a target location based on the instruction information.

The mobile object 20 includes a communication unit 21, a sensor unit 22, a position estimation unit 23, a movement control unit 24, a movement unit 25, and a temperature sensor 28. The movement unit 25 includes a drive motor 26 and a battery 27.

Note that the mobile object 20 may be an automated guided vehicle, an automatic traveling vehicle, an automated flight vehicle, an automated navigation vessel, a robot, or the like.

The storage unit stores various types of information such as route information, mobile object position information, mobile object setting information, communication delay time information, area information, in-area mobile object information, temperature information, remaining battery level information, and carrying capacity information.

Note that the storage unit may be provided inside or outside the mobile object control apparatus 10. A plurality of storage units may also be provided.

The aforementioned information will be described.

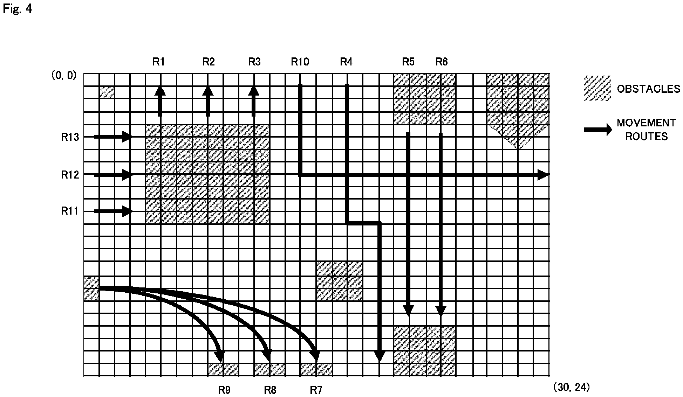

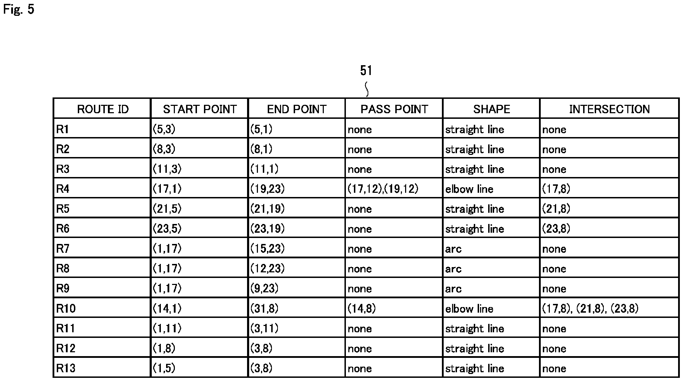

The route information is information related to routes on which the mobile objects 20 move. In addition, the route information is created by the user in advance, and is stored in the storage unit. FIG. 4 shows information indicating an example of movement routes. FIG. 5 shows information indicating an example of the data structure of the route information.

The example in FIG. 4 shows a coordinate system for expressing the positions (coordinates) of the mobile objects 20 in a factory/logistic facility, etc., movement routes R1 to R13 (solid line arrows) on which the mobile objects 20 move, and obstacles (hatched ranges).

Route information 51 shown in FIG. 5 includes route identification information "route ID" for identifying each route, route start point information "start point" indicating the coordinates of the start point of the route, route end point information "end point" indicating the coordinates of the end point of the route, pass point information "pass point" indicating coordinates through which the mobile object 20 passes when the mobile object 20 travels from the start point to the end point (coordinates on which the mobile object 20 changes directions), route shape information "shape" indicating the shapes of the movement route, and intersection information "intersection" indicating the position of an intersection on the movement route, which are associated with each other.

Note that information indicating a site from which luggage is carried in, a destination to which luggage is carried, stand-by locations of the mobile objects 20, a charging location of the mobile objects 20, and the like (which are not illustrated in FIG. 4) may be added to the route information 51.

The mobile object position information is information regarding the positions of the mobile objects 20. In addition, the mobile object position information is generated by the mobile objects 20, and is stored in the storage unit.

The mobile object position information is information that includes mobile object identification information for identifying each mobile object 20, position information indicating the position of the mobile object 20, and time-and-date information indicating time and date when the information indicating the position was obtained, which are associated with each other. In addition, speed information indicating the speeds of the mobile objects 20 may be added to the mobile object position information.

The position information is information indicating coordinates, for example. Note that the position information may indicate the positions of the mobile objects 20 using absolute coordinates, relative coordinates, vectors, patches, or the like.

As a method for obtaining the mobile object position information, the mobile object control apparatus 10 may perform polling every certain period of time, and obtain the mobile object position information from the mobile objects 20. Alternatively, the mobile object control apparatus 10 may also obtain mobile object position information that is transmitted by the mobile objects 20 every certain period of time. Alternatively, a configuration may also be adopted in which tags or the like that include position information are installed on a wall, a floor, and the like at a predetermined interval (interval corresponding to coordinates), and every time a mobile object 20 passes over a tag, mobile object position information is transmitted to the mobile object control apparatus 10.

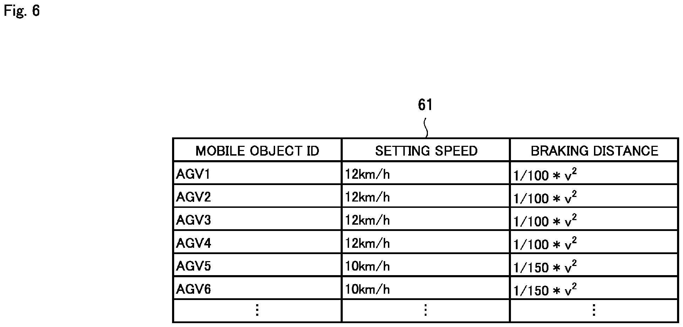

The mobile object setting information is information regarding the positions of the mobile objects 20. In addition, the mobile object setting information is created by the user in advance, and is stored in the storage unit. FIG. 6 shows information indicating an example of the data structure of the mobile object setting information. As shown in FIG. 6, mobile object setting information 61 includes mobile object identification information "mobile object ID" for identifying the mobile objects 20, setting speed information "setting speed" indicating moving speeds set for the respective mobile objects 20, and braking distance information "braking distance" indicating the braking distances of the mobile objects 20, which are associated with each other.

The speed of each mobile object 20 suitably set in advance, the maximum speed of the mobile object 20, the maximum speed in the specifications of the mobile object 20, the current speed, or the like may be used as the setting speed information. Also, from the viewpoint of the energetic efficiency, safety at the time of collision, and the like, the maximum allowable speed may also be used as the setting speed information. Furthermore, the maximum acceleration rate or the like of the mobile object 20 may also be used.

A braking distance differs according to a moving speed, and thus a braking distance that differs according to a setting speed may be set as the braking distance information. The braking distance information may have a configuration in which, for example, there are a plurality of stages in the setting speed, and a setting speed for each stage and a braking distance corresponding thereto are associated with each other. In addition, the braking distance information may also be expressed as a percentage of a setting speed.

The braking distance information may be expressed in 10 stages, namely 1 to 10 [%], 11 to 20 [%], ..., and 91 to 100 [%] of the setting speed, for example. Furthermore, the braking distance information may also be expressed as a function of the setting speed. As shown in FIG. 6, a value obtained by multiplying the square of a setting speed v by a coefficient $(1/100 \times V^2)$ may be used, for example. In FIG. 6, "km/h" represents "kilometer per hour".

Note that the mobile object setting information may also be information that includes information indicating the type of each mobile object 20, setting speed information, and the braking distance information, which are associated with each other.

Furthermore, if a mobile object 20 is an automated guided vehicle, the braking distance is affected by the brake performance thereof, friction with a floor surface, the loading capacity thereof, and the like, and thus the mobile object setting information may be generated through experiments, simulation, or the like, in consideration of the influence from these.

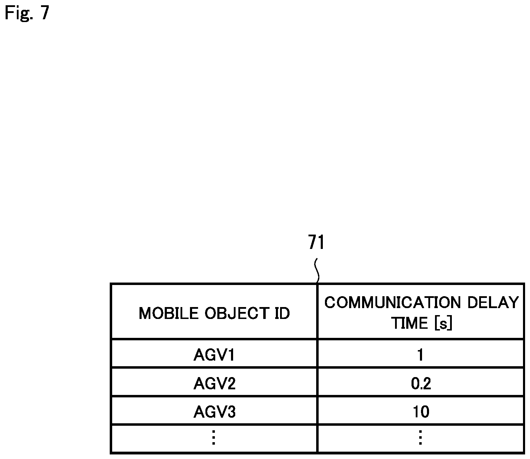

The communication delay information is information regarding communication delay times of the mobile objects 20. FIG. 7 shows information indicating an example of the data structure of the communication delay information. As shown in FIG. 7, communication delay information 71 includes identification information "mobile object ID" for identifying the mobile objects 20, communication delay time information "communication delay time [s] for indicating communication delay times (transmission delay times)", which are associated with each other. In FIG. 7, "s" represents "second".

The communication delay time information is information indicating a delay time in communication between the mobile object control apparatus 10 and each mobile object 20. Specifically, the communication delay time information indicates a period of time (T1-T0) that has elapsed from a point in time T0 at which the mobile object 20 obtained the most recent mobile object position information to a point in time T1 at which the mobile object control apparatus 10 obtained the mobile object position information. In addition, the communication delay time information may be information for collectively managing several mobile objects 20 based on the communication processing capability of each mobile object 20, a communication protocol to be used, an area in which the mobile object 20 is present, and the like.

Here, if a communication delay time is shorter than a threshold Th0 set in advance (the communication quality has not been decreased), the mobile object control apparatus 10 can accurately detect the position of the mobile object 20. However, if a communication delay time is longer than or equal to the threshold Th0 set in advance (the communication quality has decreased), the mobile object control apparatus 10 cannot accurately detect the position of the mobile object 20.

Assume that, for example, a mobile object 20 moves in one direction at 1 [m] per second, and the mobile object control apparatus 10 receives mobile object position information from the mobile object 20 with a communication delay time of 10 [seconds]. In that case, the mobile object 20 is ahead of the position (coordinates) indicated by the position information by 10 [m], and thus, when the communication quality is decreased, the position of the mobile object 20 deviates largely. Therefore, the likelihood of the mobile objects 20 colliding with each other increases.

The area information is information that is used for extracting a mobile object 20 that is other than the target mobile object 20 and is present near the target mobile object 20 at the present point in time. The area information is information indicating a range set in advance, is created by the user in advance, and is stored in the storage unit.

A range that is set within a certain distance centered on the position (coordinates) of the target mobile object 20, a range that is set to include the position (coordinates) of the target mobile object 20, or a floor of a factory/logistic facility, etc., may be set as the "range", for example.

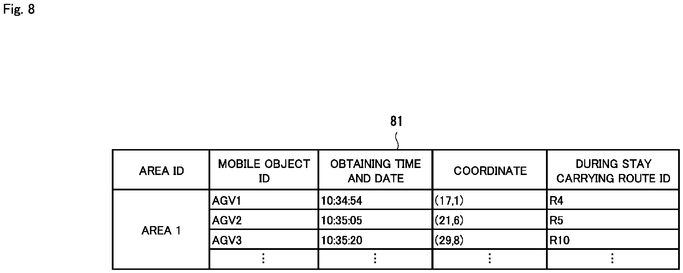

The in-area mobile object information is information regarding position information of a mobile object 20 that is present in an area set based on the area information. FIG. 8 shows information indicating an example of the data structure of the in-area mobile object information.

As shown in FIG. 8, in in-area mobile object information 81, area identification information "area ID" for identifying an area corresponding to the target mobile object 20 (the mobile object A), mobile object identification information "mobile object ID" for identifying a mobile object 20 in the area, obtaining time-and-date information "obtaining time and date" indicating time and date when position information of the mobile object 20 in the area was obtained, information "coordinate" indicating position information of the mobile object 20 in the area, and route identification information "route ID" for identifying a route corresponding to the mobile object 20 are associated with each other.

Note that the route identification information is not necessary. The reason for providing the route identification information is to make it easy to distinguish which direction to proceed when a mobile object reaches an intersection at which a plurality of movement routes intersect.

The in-area mobile object information may be generated for a mobile object 20 using the area information as described above, or may also be generated in an area set in advance, in a factory/facility, for example.

A configuration may also be adopted in which, for example, in generation of in-area mobile object information for a set area, when a mobile object 20 enters the set area, a sensor apparatus installed in the area detects the mobile object 20, generates in-area mobile object information, and transmits the generated in-area mobile object information to the mobile object control apparatus 10. Alternatively, when entering the area, a mobile object 20 may reads and recognize information regarding the area from a tag installed at an entrance of the area, generate in-area mobile object information, and transmit the generated in-area mobile object information to the mobile object control apparatus 10. The tag may include a QR (Quick Response) code (registered trademark), or the like.

Moreover, a mobile object 20 may request the mobile object control apparatus 10 to transmit in-area mobile object information to the mobile object 20. Such a request may be made at a timing when the mobile object 20 enters an area that includes an intersection at which a collision can occur, a timing when a specific tag is read, or a timing when a certain task was completed, or may be made periodically.

The temperature information is information indicating the surrounding temperature of the drive motor 26 provided in each mobile object 20.

The remaining battery level information is information indicating the residual amount of the battery 27 provided in the mobile object 20.

The carrying capacity information is information indicating the carrying capacity of the mobile object 20. The carrying capacity is expressed by the amount of luggage that can be loaded × speed ( = amount that can be carried per unit time × distance), for example.

The mobile object control apparatus will be described.

The communication unit 13 communicates with the communication unit 21 of each mobile object 20. Specifically, the communication unit 13 transmits instruction information for controlling the mobile object 20, and the like to the mobile object 20. In addition, the communication unit 13 receives, from the mobile object 20, mobile object position information, temperature information, remaining battery level information, carrying capacity information, and the like.

The instruction unit 14 generates instruction information to be used for moving the mobile object 20 to a target location. The instruction information includes information for accelerating/decelerating the mobile object 20, for example.

The estimation unit 11 estimates the mobile object B that is highly likely to collide with the target mobile object A at an intersection. That is to say, the estimation unit 11 estimates times at which the mobile object A and the mobile object B will arrive at the intersection, and estimates whether or not the mobile object A and the mobile object B will collide at the intersection.

The calculation unit 12 first estimates whether or not the mobile object A can pass through the intersection before the time at which the mobile object B will arrive at the intersection. Next, if it is estimated that the mobile object A cannot pass through the intersection before the time, the calculation unit 12 calculates speeds of the mobile objects A and B (the speed set 1 or 2) in accordance with a collision avoidance condition in order to avoid a collision with the mobile object B.

The collision avoidance condition is expressed using, for example, distance information indicating the distance between mobile objects, namely the mobile object A and the mobile object B ( = "the sum of the path between the mobile object A and the intersection and the path between the mobile object B and the intersection" ), the braking distance of the mobile object A or B, and setting speed information and communication delay times of the mobile objects A and B.

The selection unit 19 selects one of the speed sets 1 and 2 based on one of or both the surrounding temperatures of the drive motors of the mobile object A and the mobile object B and the carrying capacities of the mobile object A and the mobile object B.

Note that the estimation unit 11, the calculation unit 12, the selection unit 19, and the instruction unit 14 will be described later in detail.

A mobile object will be described.

The communication unit 21 communicates with the communication unit 13 of the mobile object control apparatus 10. Specifically, the communication unit 21 transmits the mobile object position information, the temperature information, the remaining battery level information, the carrying capacity information, and the like to the mobile object control apparatus 10. In addition, the communication unit 21 receives, from the mobile object control apparatus 10, instruction information to be used for performing movement control of the mobile object 20, and the like.

The sensor unit 22 is a sensor that detects the state of the mobile object 20, a target object (for example, a tray and a shelf), a sign for assisting movement of the mobile object 20, and an obstacle and the like on an actual route, for example. Specifically, the sensor unit 22 includes one or more of apparatuses such as a radar, an ultrasonic wave sensor, an image capturing apparatus, gyroscope, an encoder, and GPS (Global Positioning System).

The position estimation unit 23 estimates the position of the mobile object 20 itself. Specifically, the position estimation unit 23 obtains measurement information indicating a measurement result of the sensor unit 22, estimates the position of the mobile object 20 itself based on the obtained measurement information, and generates mobile object position information.

The movement control unit 24 controls the movement unit 25 that is provided in the mobile object 20 and is used for moving the mobile object 20. Specifically, the movement control unit 24 controls the movement unit 25 using the above information and the like, and moves the mobile object 20 to a target location. The movement control unit 24 controls a mechanism of the mobile object 20.

The movement unit 25 is a device for moving the mobile object 20. Specifically, if the mobile object 20 is an automated guided vehicle, an electric automobile, or the like, the movement unit 25 is a means that is used for moving a vehicle, such as the drive motor 26, wheels (or crawler), the battery 27, and the like.

The number of revolutions of the drive motor 26 is controlled by the movement control unit 24 in accordance with an operation of the mobile object 20 (for example, start, moving speed, or stop). The drive motor 26 is supplied with power from the battery 27.

The battery 27 is a secondary battery such as a lithium ion battery, a nickel/hydrogen battery, a nickel/-cadmium battery, or a lead storage battery. Note that a primary battery may be used as the battery 27. The temperature sensor 28 measures the surrounding temperature of the drive motor 26.

The estimation unit will be described in detail.

The collision estimation unit 15 estimates the mobile object B that is highly likely to collide with the target mobile object A at an intersection.

Specifically, the collision estimation unit 15 first obtains mobile object position information from mobile objects 20. Next, the collision estimation unit 15 extracts a mobile object 20 that is present in an area corresponding to the target mobile object 20, using the mobile object position information of the target mobile object 20 and the area information. The collision estimation unit 15 then generates in-area mobile object information related to the extracted mobile object 20, and stores the in-area mobile object information in the storage unit.

Next, the collision estimation unit 15 extracts mobile objects 20 that cannot be detected by the sensor unit 22 of the target mobile object A (mobile objects 20 that are hidden), from the mobile object 20 that is present in the area.

Next, the collision estimation unit 15 refers to the route information, extracts a mobile object 20 that has not arrived at the same intersection the target mobile object A has not arrived at, from among the mobile objects 20 that could not be detected by the sensor unit 22 of the target mobile object A, and sets the extracted mobile object 20 as a collision estimation target.

Next, the collision estimation unit 15 refers to the communication delay information, and obtains communication delay time information corresponding to the mobile object 20 set as a collision estimation target.

Next, if the communication delay time information is higher than or equal to the threshold Th0 set in advance, the collision estimation unit 15 determines that that communication quality has decreased, and estimates that the selected mobile object 20 is the mobile object B that is highly likely to collide with the target mobile object A at the intersection.

The average value, the median, the worst value, variations, or the like of transmission delay times at a predetermined time may be used as communication delay time information. The threshold Th0 may be obtained through experiments, simulation, or the like.

A decrease in the communication quality may be a case where a region of a position at which the mobile object B can be present (for example, a region that is occupied by the mobile object B when it is assumed that the mobile object B moves in all possible directions at the maximum speed from a position thereof that was lastly obtained, during a period (present time - a time at which the position was obtained lastly + transmission delay time)) has spread to a certain size (the length, the radium, the area, or the like of the region) or larger.

Note that, when the communication quality recovers, and a mobile object 20 that is highly likely to collide with the target mobile object 20 can be detected by the sensor unit 22 of the target mobile object 20, a collision is avoided using a conventional collision avoidance technique. Examples of the conventional collision avoidance technique include priority control that is realized on FIFO (First In First Out) basis at the intersection.

When the mobile object B that is highly likely to collide with the target mobile object A is estimated, the arrival time estimation unit 16 refers to the mobile object setting information, and estimates times at which the target mobile object A and the mobile object B that is highly likely to collide with the target mobile object A will arrive at the intersection.

Specifically, the arrival time estimation unit 16 estimates a time at which the target mobile object A will arrive at the intersection, using the route information indicating a route corresponding to the target mobile object A, the position information indicating the position of the target mobile object A, the intersection position information indicating the position of an intersection that is present on the route, and the speed information indicating the speed of the target mobile object A.

Also, the arrival time estimation unit 16 estimates a time at which the mobile object B will arrive at the intersection, based on the route information indicating a route corresponding to the mobile object B that is highly likely to collide with the target mobile object A, the position information indicating the position of the mobile object B, the intersection position information indicating the position of an intersection that is present on the route, and the setting speed information indicating the setting speed of the mobile object B.

The calculation unit will be described in detail.

The passage estimation unit 17 estimates whether or not the target mobile object 20 can pass through the intersection before the time at which the mobile object 20 that is highly likely to collide with the target mobile object 20 will arrive at the intersection.

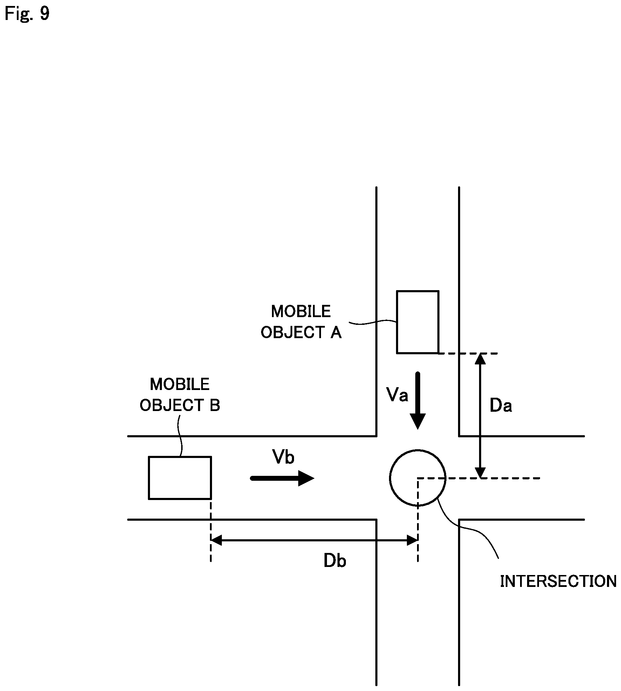

If it is estimated that the target mobile object 20 cannot pass through the intersection before the time, the collision avoidance speed calculation unit 18 calculates a speed Va of the mobile object A and a speed Vb of the mobile object B (the speed set 1) that satisfy a collision avoidance condition expressed by Formula 1. A description will be given with reference to FIG. 9. FIG. 9 is a diagram for describing the collision avoidance condition.

Formula 1

$$Dab > Ta \times Va + Dsa + Tb \times Vb$$

$$Dab = Da + Db$$

Da: path from the mobile object A to the intersection
Db: path from the mobile object B to the intersection
Dab: path from the mobile object A to the mobile object B via the intersection
Dsa: braking distance of the moving object A
Ta: communication delay times of the moving object A
Va: moving speeds of moving body A
Tb: communication delay times of the moving object B
Vb: moving speeds of moving body B

Specifically, the speed set 1 includes the speed Va for decreasing the current speed of the mobile object A and the current speed Vb of the mobile object B.

Moreover, if it is estimated that the target mobile object 20 cannot pass through the intersection before the time, the collision avoidance speed calculation unit 18 calculates the speed Va of the mobile object A and the speed Vb of the mobile object B (the speed set 2) that satisfy a collision avoidance condition expressed by Formula 2. Specifically, the speed set 2 includes the speed Vb for decreasing the current speed of the mobile object B and the current speed Va of the mobile object A.

Formula 2

$$Dab > Ta \times Va + Tb \times Vb + Dsb$$

$$Dab = Da + Db$$

Dsb: braking distance of the moving object B

Moreover, in calculation of Formula 1 and Formula 2 above, the safety may be further increased by multiplying the right side of the collision avoidance condition of each of Formula 1 and Formula 2 by a safety factor $\alpha$ (<1). Formula 3 expresses a collision avoidance condition obtained by multiplying the right side of Formula 1 by the safety factor $\alpha$. In addition, Formula 4 expresses a collision avoidance condition obtained by multiplying the right side of Formula 2 by the safety factor $\alpha$.

Formula 3

$$Dab > \alpha \, (Ta \times Va + Dsa + Tb \times Vb)$$

$\alpha$: safety factor

Formula 4

$$Dab > \alpha \, (Ta \times Va + Tb \times Vb + Dsb)$$

The selection unit will be described in detail.

If the surrounding temperature of the drive motor of the mobile object A or the mobile object B is higher than or equal to the threshold Th1, the selection unit 19 selects a speed set that prioritizes the lifespan, based on the magnitude relationship between the surrounding temperatures of the drive motors of the mobile object A and the mobile object B. In addition, if the surrounding temperatures of drive motors of the mobile object A and the mobile object B are lower than the threshold Th1 (are not higher than or equal to the threshold Th1), the selection unit 19 selects a speed set that prioritizes the carrying efficiency, based on the magnitude relationship between the carrying capacities of the mobile object A and the mobile object B.

Specifically, the selection unit 19 first obtains temperature information of the mobile obj ect A and temperature information of the mobile obj ect B. Next, the selection unit 19 determines whether or not a surrounding temperature Ha of the drive motor of the mobile object A or a surrounding temperature Hb of the drive motor of the mobile object B is higher than or equal to the threshold Th1 for temperature determination.

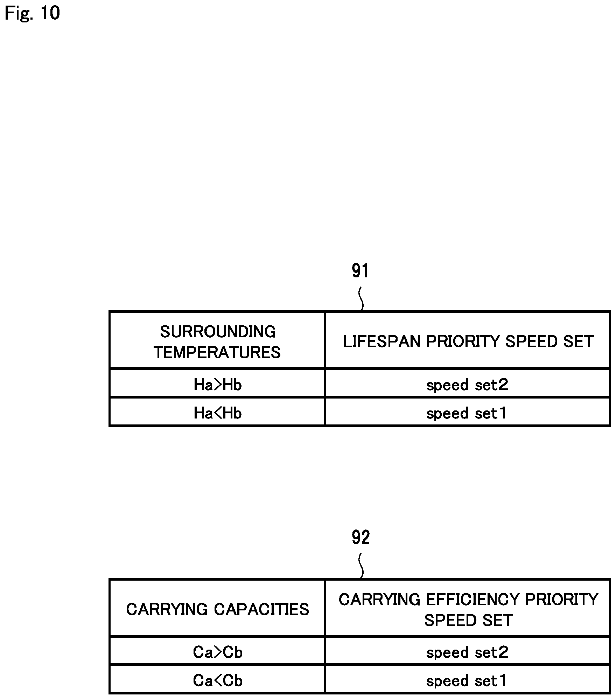

Next, if the surrounding temperature Ha or Hb is higher than or equal to the threshold Th1, the selection unit 19 refers to speed set selection information 91 shown in FIG. 10, for example, and obtains a speed set that prioritizes the lifespan. FIG. 10 is a diagram showing an example of the data structure of the speed set selection information.

The threshold Th1 is a temperature at which the lubricant of the drive motor 26 deteriorates, for example, and may be obtained through experiments, simulation, or the like.

When the speed set selection information 91 in FIG. 10 is used, the selection unit 19 obtains the speed set 2 if the magnitude relationship between the surrounding temperatures is Ha>Hb, and obtains the speed set 1 if the magnitude relationship between the surrounding temperatures is Ha<Hb. Note that if the magnitude relationship between the surrounding temperatures is Ha = Hb, one of the speed sets 1 and 2 is obtained.

The speed set 2 is selected if the magnitude relationship between the surrounding temperatures is Ha>Hb, in order to decrease the speed of the mobile object B in which the temperature of the drive motor 26 is low. This prevents the mobile object A from being decelerated, and thus the number of revolutions of the drive motor 26 does not decrease, and the torque does not increase, whereby a current can be suppressed. Therefore, it is possible to suppress an increase in the temperature of the drive motor 26 of the mobile object A.

Moreover, the speed set 1 is selected if the magnitude relationship between the surrounding temperatures is Ha<Hb, in order to decrease the speed of the mobile obj ect A in which the temperature of the drive motor 26 is low. This prevents the mobile object B from being decelerated, and thus the number of revolutions of the drive motor 26 does not decrease, and the torque does not increase, whereby a current can be suppressed. Therefore, it is possible to suppress an increase in the temperature of the drive motor 26 of the mobile object B.

In this manner, by controlling mobile objects, it is possible to suppress variation in the lifespans of the plurality of mobile objects 20 in the system 100a.

Furthermore, a configuration may be adopted in which the number of times each mobile object 20 has reached the speed of the threshold Th1 set in advance or lower is stored, and the speed of the mobile object 20 for which the number of times is low decreased. This can suppress an increase in the temperature of a mobile object 20 that has reached the threshold Th1 or lower a larger number of times (that has a higher risk of temperature increase), and it is possible to suppress variation in lifespan of a plurality of automated guided vehicles.

Moreover, if the surrounding temperatures Ha and Hb are lower than the threshold Th1 (are not higher than or equal to the threshold Th1), the selection unit 19 refers to speed set selection information 92 shown in FIG. 9, for example, and obtains a speed set that prioritizes the carrying efficiency.

When the speed set selection information 92 in FIG. 10 is used, the selection unit 19 obtains the speed set 2 if the magnitude relationship between the carrying capacities is Ca>Cb, and obtains the speed set 1 if the magnitude relationship between the carrying capacities is Ca<Cb. Note that, if the magnitude relationship between the carrying capacities is Ca = Cb, one of the speed sets 1 and 2 is obtained.

The speed set 2 is selected if the magnitude relationship between the carrying capacities is Ca>Cb, in order to decrease the speed of the mobile object B that has a low carrying capacity. This prevents the mobile object A from being decelerated, and thus it is possible to improve the carrying efficiency of the mobile object A that has a high carrying capacity.

Also, the speed set 1 is selected if the magnitude relationship between the carrying capacities is Ca<Cb, in order to decrease the speed of the mobile object A that has a low carrying capacity. This prevents the mobile object B from being decelerated, and thus it is possible to improve the carrying efficiency of the mobile object B that has a high carrying capacity.

Note that, in the above example, a speed set that prioritizes the lifespan or a speed set that prioritizes the carrying efficiency is selected in accordance with the surrounding temperature Ha or Hb. However, if the surrounding temperature Ha or Hb is higher than or equal to the threshold Th1, only a speed set that prioritizes the lifespan may be selected. Alternatively, if the surrounding temperatures Ha and Hb are lower than the threshold Th1 (are not higher than or equal to the threshold Th1), only a speed set that prioritizes the carrying efficiency may be selected.

The instruction unit 14 will be described in detail.

The instruction unit 14 generates instruction information for setting the moving speeds of the mobile objects A and B using the speed set 1 or 2 selected by the selection unit 19. Next, the instruction unit 14 transmits the instruction information to the mobile objects A and B.

When the instruction information is obtained, the mobile objects A and B change the moving speeds thereof based on the moving speeds included in the instruction information.

[Apparatus operations]

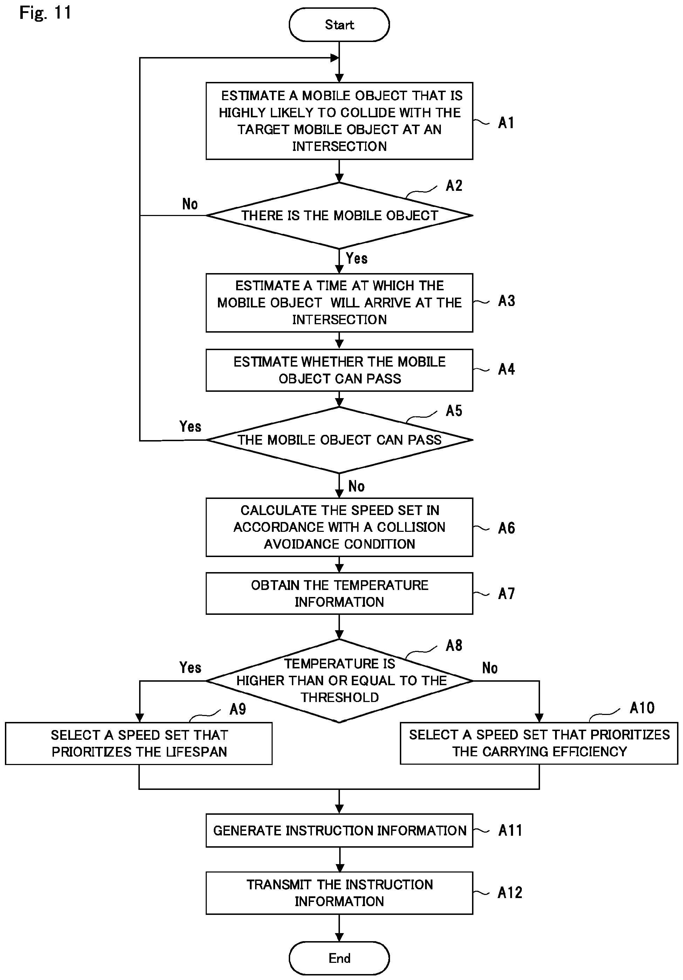

Next, operations of the mobile object control apparatus according to the first example embodiment of the invention will be described with reference to FIG. 11. FIG. 11 is a diagram for describing an exemplary operation of the mobile object control apparatus according to the first example embodiment. In the following description, FIGS. 1 to 10 will be referred to as appropriate. In addition, in the first example embodiment, a mobile object control method is executed as a result of operating the mobile object control apparatus. Thus, a description of the mobile object control method according to the first example embodiment is replaced with the following description of operations of the mobile object control apparatus.

As shown in FIG. 11, first, the estimation unit 11 estimates a mobile object 20 (the mobile object B) that is highly likely to collide with the target mobile object 20 (the mobile object A) at an intersection (step A1).

Specifically, in step A1, the collision estimation unit 15 of the estimation unit 11 first obtains mobile object position information from the mobile objects 20. Next, in step A1, the collision estimation unit 15 extracts mobile objects 20 that are present in an area corresponding to the target mobile object A using the mobile object position information of the target mobile object A and the area information. The collision estimation unit 15 then generates in-area mobile object information related to the extracted mobile objects 20, such as that shown in FIG. 8, and stores the generated in-area mobile object information in the storage unit.

Next, in step A1, the collision estimation unit 15 further extracts mobile objects 20 that cannot be detected by the sensor unit 22 of the target mobile object 20 (mobile objects 20 that are hidden), from the mobile objects 20 that are present in the area.

Next, in step A1, the collision estimation unit 15 further refers to the route information, extracts a mobile object 20 that has not arrived at the same intersection that the target mobile object 20 has not arrived at, from the mobile objects 20 that could not be detected by the sensor unit 22 of the target mobile object A, and selects the extracted mobile object 20 as a collision estimation target.

Next, in step A1, the collision estimation unit 15 refers to the communication delay information, and obtains communication delay time information corresponding to the mobile object 20 selected as a collision estimation target.

Next, in step A1, if the transmission delay time information is higher than or equal to the threshold Th0 set in advance, the collision estimation unit 15 determines that the communication quality has decreased, and estimates that the selected mobile object 20 is the mobile object B that is highly likely to collide with the target mobile object A at the intersection.

Next, when there is the mobile object B that is highly likely to collide with the target mobile object A (step A2: Yes), the estimation unit 11 estimates times at which the mobile object A and the mobile object B will arrive at the intersection (step A3). In addition, if there is no mobile object B that is highly likely to collide with the target mobile object A (step A2: No), the estimation unit 11 transitions the procedure to step A1.

Specifically, in step A3, the arrival time estimation unit 16 of the estimation unit 11 estimates a time at which the target mobile object A will arrive at the intersection, based on the route information indicating a route corresponding to the target mobile object A, the position information indicating the position of the target mobile object A, the intersection position information indicating the position of an intersection that is present on the route, and the speed information indicating the speed of the target mobile object A.

Moreover, in step A3, the arrival time estimation unit 16 estimates a time at which the mobile object B will arrive at the intersection, based on the route information indicating a route corresponding to the mobile object B that is highly likely to collide with the target mobile object A, the position information indicating the position of the mobile object B, the intersection position information indicating the position of an intersection that is present on the route, and the setting speed information indicating the setting speed of the mobile object B.

Next, the calculation unit 12 estimates whether or not the mobile object A can pass through the intersection before the time at which the mobile object B will arrive at the intersection (step A4).

Specifically, in step A4, the passage estimation unit 17 estimates whether or not the target mobile obj ect A can pass through the intersection before the time at which the mobile obj ect A that is highly likely to collide with the target mobile object A will arrive at the intersection.

Next, if it is estimated that the mobile obj ect A cannot pass through the intersection before the time (step A5: No), the calculation unit 12 calculates the speed of the mobile object A in accordance with a collision avoidance condition in order to avoid a collision with the mobile object B (step A6). In addition, if it is estimated that the mobile object A can pass through the intersection (step A5: Yes), the calculation unit 12 transitions the procedure to step A1.

Specifically, in step A6, if it is estimated that the target mobile object 20 cannot pass through the intersection before the time, the collision avoidance speed calculation unit 18 calculates a speed Ta of the mobile object A and a speed Tb of the mobile object B (the speed set 1) that satisfy a collision avoidance condition expressed by Formula 1.

Moreover, in step A6, if it is estimated that the target mobile object 20 cannot pass through the intersection before the time, the collision avoidance speed calculation unit 18 calculates the speed Ta of the mobile object A and the speed Tb of the mobile object B (the speed set 2) that satisfy a collision avoidance condition expressed by Formula 2.

Next, the selection unit 19 first obtains the temperature information of the mobile object A and the temperature information of the mobile object B (step A7). Next, the selection unit 19 determines whether or not the surrounding temperature Ha of the drive motor of the mobile object A or the surrounding temperature Hb of the drive motor of the mobile object B is higher than or equal to the threshold Th1 for temperature determination (step A8).

Specifically, if the surrounding temperature Ha or Hb is higher than or equal to the threshold Th1 (step A8: Yes), the selection unit 19 selects a speed set that prioritizes the lifespan, based on the magnitude relationship between the surrounding temperatures of the drive motors of the mobile object A and the mobile object B (step A9).

Specifically, in step A9, the selection unit 19 obtains the speed set 2 if the magnitude relationship between the surrounding temperatures is Ha>Hb, and obtains the speed set 1 if the magnitude relationship between the surrounding temperatures is Ha<Hb. Note that, if the magnitude relationship between the surrounding temperatures is Ha = Hb, one of the speed sets 1 and 2 is obtained.

Moreover, if the surrounding temperatures of the drive motors of the mobile object A and the mobile object B are lower than the threshold Th1 (are not higher than or equal to the threshold Th1) (step A8: No), the selection unit 19 selects a speed set that prioritizes the carrying efficiency, based on the magnitude relationship between the carrying capacities of the mobile object A and the mobile object B (step A10).

Specifically, in step A10, if the surrounding temperatures Ha and Hb are lower than the threshold Th1 (are not higher than or equal to the threshold Th1), the selection unit 19 refers to the speed set selection information 92 shown in FIG. 10, for example, and obtains a speed set that prioritizes the carrying efficiency. If the magnitude relationship between the carrying capacities is Ca = Cb, one of the speed sets 1 and 2 is obtained.

Note that, in the above example, the speed set that prioritizes the lifespan or the speed set that prioritizes the carrying efficiency is selected based on the surrounding temperature Ha or Hb. However, if the surrounding temperature Ha or Hb is higher than or equal to the threshold Th1, only the speed set that prioritizes the lifespan may be selected. Alternatively, if the surrounding temperatures Ha and Hb are lower than the threshold Th1 (are not higher than or equal to the threshold Th1), only the speed set that prioritizes the carrying efficiency may be selected.

Next, the instruction unit 14 generates instruction information for setting moving speeds of the mobile objects A and B using the speed set 1 or 2 selected by the selection unit 19 (step A11). Next, the instruction unit 14 transmits the instruction information to the mobile objects A and B (step A12).

Subsequently, when the instruction information is obtained, the mobile objects A and B change the moving speeds thereof based on the moving speeds included in the instruction information.

In the first example embodiment, processing of steps A1 to A12 is repeatedly performed (when processing of step 12 ends, the processing starts from step A1 again).

[Effects of first example embodiment]

As described above, according to the first example embodiment, the speed of a mobile object is changed to a speed that prioritizes the lifespan based on the surrounding temperature of the drive motor of the mobile object, and thus the lifespan of the mobile object can be extended.

Moreover, according to the first example embodiment, the speed of a mobile object is changed to a speed that prioritizes the carrying efficiency based on the carrying capacity of the mobile object, and thus it is possible to suppress a decrease in the carrying efficiency of the mobile obj ect.

Furthermore, according to the first example embodiment, even if communication delay occurs due to a decrease in the communication quality, the speed of a mobile object can be changed to a speed that prioritizes the lifespan or a speed that prioritizes the carrying efficiency in consideration of communication delay time of the mobile object, and thus it is possible to avoid a collision between mobile objects.

[Program]

A program according to the first example embodiment of the invention may be a program for causing a computer to execute steps A1 to A12 shown in FIG. 11. By installing this program to the computer, and executing the program, it is possible to realize the mobile object control apparatus and a mobile object control method according to the first example embodiment. In this case, the processor of the computer functions as the estimation unit 11 (the collision estimation unit 15, the arrival time estimation unit 16), the calculation unit 12 (the passage estimation unit 17, the collision avoidance speed calculation unit 18), the selection unit 19, the communication unit 13, and the instruction unit 14, and performs processing.

Moreover, the program according to the first example embodiment may also be executed by a computer system constituted by a plurality of computers. In this case, for example, each of the computers may function as one of the estimation unit 11 (the collision estimation unit 15, the arrival time estimation unit 16), the calculation unit 12 (the passage estimation unit 17, the collision avoidance speed calculation unit 18), the selection unit 19, the communication unit 13, and the instruction unit 14.

(Second Example Embodiment)

The following describes a second example embodiment of the invention with reference to drawings. Note that, in the drawings to be described below, the same reference numerals are given to constituent elements that have the same functions or corresponding functions, and a redundant description thereof may be omitted.

[Apparatus configuration]

Next, the configuration of the mobile object control apparatus 10 according to the second example embodiment will be described. In the second example embodiment, a function for selecting a speed set using surrounding temperatures, carrying capacities, and remaining battery levels is added to the selection unit 19 according to the first example embodiment.

Note that there is no difference in configuration between the second example embodiment and the first example embodiment, and thus the selection unit 19 according to the second example embodiment will be described.

If the surrounding temperature of the drive motor 26 of the mobile obj ect A or the mobile object B is higher than or equal to a threshold Th1 for temperature determination, and the remaining battery level of the mobile object A or the mobile object B is higher than or equal to a threshold Th2 for remaining battery level determination, the selection unit 19 according to the second example embodiment selects a speed set based on the magnitude relationship between the surrounding temperatures of the drive motors 26 of the mobile object A and the mobile object B.

Moreover, if the surrounding temperatures of the drive motors 26 of the mobile object A and the mobile object B are lower than the threshold Th1 (are not higher than or equal to the threshold Th1) and the remaining battery levels of the mobile object A and the mobile object B are higher than or equal to the threshold Th2, the selection unit 19 according to the second example embodiment selects a speed set based on the magnitude relationship between the carrying capacities of the mobile object A and the mobile object B.

Moreover, if the remaining battery level of the mobile object A or the mobile object B is lower than the threshold Th2 (is not higher than or equal to the threshold Th2), the selection unit 19 according to the second example embodiment selects a speed set based on the magnitude relationship between the remaining battery levels of the mobile object A and the mobile object B.

The threshold Th2 may be obtained through experiments, simulation, or the like.

[System configuration]

The second example embodiment will be described using the system 100a in FIG. 2. In the first example embodiment, the estimation unit 11 of the mobile object control apparatus 10 (the collision estimation unit 15, the arrival time estimation unit 16), the calculation unit 12 (the passage estimation unit 17, the collision avoidance speed calculation unit 18), the communication unit 13, and the instruction unit 14 have already been described, and thus a description thereof is omitted.

Moreover, the communication unit 21, the sensor unit 22, the position estimation unit 23, the movement control unit 24, the movement unit 25 (the drive motor 26, the battery 27), and the temperature sensor 28 of the mobile object 20 have already been described, and thus a description thereof is omitted. In addition, the storage unit also has already been described, and thus a description thereof is omitted.

The selection unit according to the second example embodiment will be described in detail.

If the surrounding temperature of the drive motor 26 of the mobile object A or the mobile object B is higher than or equal to the threshold Th1, and the remaining battery level of the mobile object A or the mobile object B is higher than or equal to the threshold Th2, the selection unit 19 according to the second example embodiment selects a speed set that prioritizes the lifespan based on the magnitude relationship between the surrounding temperatures of the drive motors 26 of the mobile object A and the mobile object B.

Specifically, the selection unit 19 first obtains temperature information and remaining battery level information of each of the mobile object A and the mobile object B.

Next, the selection unit 19 determines whether or not the surrounding temperature Ha of the drive motor of the mobile object A or the surrounding temperature Hb of the drive motor of the mobile object B is higher than or equal to the threshold Th1 for temperature determination.

Furthermore, if the surrounding temperature Ha or Hb is higher than or equal to the threshold Th1, the selection unit 19 determines whether or not a remaining battery level Sa of the mobile object A or the remaining battery level Sb of the mobile object B is higher than or equal to the threshold Th2 for remaining battery level determination.

Next, if the surrounding temperature of the drive motor 26 of the mobile object A or the mobile object B is higher than or equal to the threshold Th1 and the remaining battery level of the mobile object A or the mobile object B is higher than or equal to the threshold Th2, the selection unit 19 refers to the speed set selection information 91 shown in FIG. 10, for example, and obtains a speed set that prioritizes the lifespan.

When the speed set selection information 91 in FIG. 10 is used, the selection unit 19 obtains the speed set 2 if the magnitude relationship between the surrounding temperatures is Ha>Hb, and obtains the speed set 1 if the magnitude relationship between the surrounding temperatures is Ha<Hb. Note that, if the magnitude relationship between the surrounding temperatures is Ha = Hb, one of the speed sets 1 and 2 is obtained.

Moreover, if the surrounding temperatures Ha and Hb are not higher than or equal to the threshold Th1, the selection unit 19 determines whether or not the remaining battery level Sa of the mobile object A or the remaining battery level Sb of the mobile object B is higher than or equal to the threshold Th2 for remaining battery level determination.

Next, if the surrounding temperatures of the drive motors 26 of the mobile object A and the mobile object B are not higher than or equal to the threshold Th1 and the remaining battery levels of the mobile object A and the mobile object B are higher than or equal to the threshold Th2, the selection unit 19 refers to the speed set selection information 92 in FIG. 10, for example, and obtains a speed set that prioritizes the carrying efficiency.

When the speed set selection information 92 in FIG. 10 is used, the selection unit 19 obtains the speed set 2 if the magnitude relationship between the carrying capacities is Ca>Cb, and obtains the speed set 1 if the magnitude relationship between the carrying capacities is Ca<Cb. Note that, if the magnitude relationship between the carrying capacities is Ca = Cb, one of the speed sets 1 and 2 is obtained.

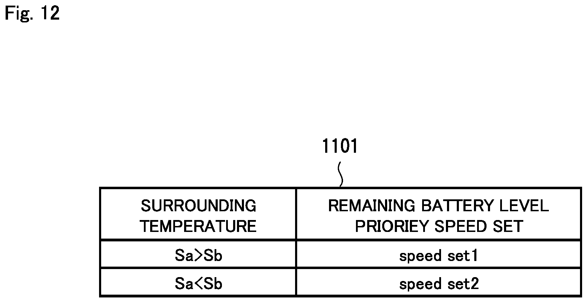

Moreover, after determining whether or not the surrounding temperature Ha of the drive motor of the mobile object A or the surrounding temperature Hb of the drive motor of the mobile object B is higher than or equal to the threshold Th1 for temperature determination, if the remaining battery level Sa of the mobile object A and the remaining battery level Sb of the mobile obj ect B are not higher than or equal to the threshold Th2 for remaining battery level determination, the selection unit 19 refers to the speed set selection information 1101 shown in FIG. 12, for example, and obtains a speed set that prioritizes the remaining battery level. FIG. 12 is a diagram showing an example of the data structure of the speed set selection information.

When the speed set selection information 1101 in FIG. 12 is used, the selection unit 19 obtains the speed set 1 if the magnitude relationship between the remaining battery levels is Sa>Sb, and obtains the speed set 2 if the magnitude relationship between the remaining battery level is Sa<Sb. Note that, if the magnitude relationship between the remaining battery levels is Sa = Sb, one of the speed sets 1 and 2 is obtained.

The speed set 1 is selected if the magnitude relationship between the remaining battery levels is Sa>Sb, in order to decrease the speed of the mobile object A in which the remaining battery level is high. This prevents the mobile object B from being decelerated, and thus it is possible to suppress a drive current to the drive motor 26 of the mobile object B in which the remaining battery level is low, and thereby to suppress the consumption amount of the battery of the mobile object B.

Moreover, the speed set 2 is selected if the magnitude relationship between the remaining battery levels is Sa<Sb, in order to decrease the speed of the mobile object B in which the remaining battery level is high. This prevents the mobile object A from being decelerated, and thus it is possible to suppress a drive current to the drive motor 26 of the mobile object A in which the remaining battery level is low, and thereby to suppress the consumption amount of the battery of the mobile object A.

[Apparatus operations]

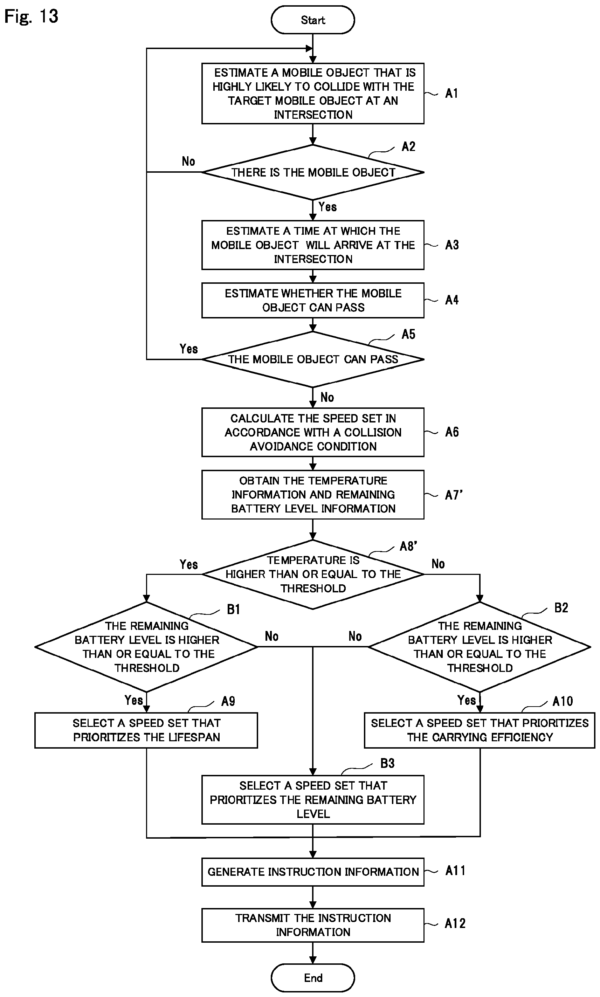

Next, operations of the mobile object control apparatus according to the second example embodiments of the invention will be described with reference to FIG. 13. FIG. 13 is a diagram for describing an exemplary operation of the mobile object control apparatus according to the second example embodiment. In the following description, FIGS. 1 to 12 will be referred to as appropriate. In addition, in the second example embodiment, a mobile object control method is executed as a result of operating the mobile object control apparatus. Thus, a description of the mobile object control method according to the second example embodiment is replaced with the following description of operations of the mobile object control apparatus.

Steps A1 to A12 shown in FIG. 13 have already been described in the first example embodiment, and thus a description thereof is omitted. Thus, steps A7', A8', B1, B2, and B3 will be described.

The selection unit 19 first obtains temperature information and remaining battery level information of each of the mobile object A and the mobile object B (step A7').

Next, the selection unit 19 determines whether or not the surrounding temperature Ha of the drive motor of the mobile object A or the surrounding temperature Hb of the drive motor of the mobile object B is higher than or equal to the threshold Th1 for temperature determination (step A8').

Next, if the surrounding temperature Ha or Hb is higher than or equal to the threshold Th1 (step A8': Yes), the selection unit 19 determines whether or not the remaining battery level Sa of the mobile object A or the remaining battery level Sb of the mobile object B is higher than or equal to the threshold Th2 for remaining battery level determination (step B 1).

Next, if the surrounding temperature of the drive motor 26 of the mobile object A or the mobile object B is higher than or equal to the threshold Th1, and the remaining battery level of the mobile object A or the mobile object B is higher than or equal to the threshold Th2 (step B 1: Yes), the selection unit 19 refers to the speed set selection information 91 shown in FIG. 10, for example, and obtains a speed set that prioritizes the lifespan (step A9).

When the speed set selection information 91 in FIG. 10 is used, the selection unit 19 obtains the speed set 2 if the magnitude relationship between the surrounding temperatures is Ha>Hb, and obtains the speed set 1 if the magnitude relationship between the surrounding temperatures is Ha<Hb. Note that, if the magnitude relationship between the surrounding temperatures is Ha = Hb, one of the speed sets 1 and 2 is obtained.

Moreover, if the surrounding temperatures Ha and Hb are not higher than or equal to the threshold Th1 (step A8' : No), the selection unit 19 determines whether or not the remaining battery level Sa of the mobile object A or the remaining battery level Sb of the mobile object B is higher than or equal to the threshold Th2 for remaining battery level determination (step B2).

Next, if the surrounding temperatures of the drive motors 26 of the mobile object A and the mobile object B are not higher than or equal to the threshold Th1, and the remaining battery levels of the mobile object A and the mobile object B are higher than or equal to the threshold Th2 (step B2: Yes), the selection unit 19 refers to the speed set selection information 92 shown in FIG. 10, for example, and obtains the speed set that prioritizes the carrying efficiency (step A10).

When the speed set selection information 92 in FIG. 10 is used, the selection unit 19 obtains the speed set 2 if the magnitude relationship between the carrying capacities is Ca>Cb, and obtains the speed set 1 if the magnitude relationship between the carrying capacities is Ca<Cb. Note that, if the magnitude relationship between the carrying capacities is Ca = Cb, one of the speed sets 1 and 2 is obtained.

Moreover, after determining whether or not the surrounding temperature Ha of the drive motor of the mobile object A or the surrounding temperature Hb of the drive motor of the mobile object B is higher than or equal to the threshold Th1 for temperature determination (step A8'), if the remaining battery level Sa of the mobile object A and the remaining battery level Sb of the mobile object B are not higher than or equal to the threshold Th2 for remaining battery level determination (step B 1: No or step B2: No), the selection unit 19 refers to the speed set selection information 1101 shown in FIG. 12), for example, and obtains a speed set that prioritizes the remaining battery level (step B3).

When the speed set selection information 1101 in FIG. 12 is used, the selection unit 19 obtains the speed set 1 if the magnitude relationship between the remaining battery levels is Sa>Sb, and obtains the speed set 2 if the magnitude relationship between the remaining battery levels is Sa<Sb. Note that, if the magnitude relationship between the remaining battery levels is Sa = Sb, one of the speed sets 1 and 2 is obtained.

[Effects of second example embodiment]

As described above, according to the second example embodiment, the speeds of mobile objects are changed to speeds that prioritize the remaining battery level based on the remaining battery levels of the mobile objects, and thus the consumption amounts of the batteries can be suppressed.

Moreover, according to the second example embodiment, the speeds of mobile objects are changed to speeds that prioritize the lifespan based on the surrounding temperatures of the drive motors of mobile objects, and thus the lifespans of the mobile objects can be extended.

Moreover, according to the second example embodiment, the speeds of mobile objects are changed to speeds that prioritize the carrying efficiency based on the carrying capacities of the mobile objects, and thus it is possible to suppress a decrease in the carrying efficiencies of the mobile objects.

Furthermore, according to the second example embodiment, even if communication delay occurs due to a decrease in the communication quality, the speeds of mobile objects can be changed to speeds that prioritize the lifespan or speeds that prioritize the carrying efficiency in consideration of communication delay times of the mobile objects, and thus it is possible to avoid a collision between the mobile objects.

[Program]

The program according to an embodiment 2 of the invention may be a program that causes a computer to execute steps A1 to A6, A7', A8', A9 to A12, B1 to B3 shown in FIG. 13. By installing this program in a computer and executing the program, the mobile object control apparatus and the mobile object control method according to the example embodiment 2 can be realized. In this case, the processor of the computer performs processing to function as the estimation unit 11 (the collision estimation unit 15, the arrival time estimation unit 16), the calculation unit 12 (the passage estimation unit 17, the collision avoidance speed calculation unit 18), the selection unit 19, the communication unit 13, and the instruction unit 14.

Also, the program according to the embodiment 2 may be executed by a computer system constructed by a plurality of computers. In this case, for example, each computer may function as any of the estimation unit 11 (the collision estimation unit 15, the arrival time estimation unit 16), the calculation unit 12 (the passage estimation unit 17, the collision avoidance speed calculation unit 18), the selection unit 19, the communication unit 13, and the instruction unit 14.

[Modified example 1]

In modified example 1, a mobile object-based system 100b shown in FIG. 3 will be described. The difference between the system 100a and the system 100b is that the estimation unit 11, the calculation unit 12, the selection unit 19, and the instruction unit 14 are mounted in a main mobile object 20m. Note that the configuration of a sub mobile object 20 has a similar configuration to that of the mobile object 20 shown in FIG. 2.

In addition, the sub mobile object 20 communicates with the main mobile object 20m, the speeds of the mobile object 20m and the mobile object 20 are changed based on one or all of surrounding temperatures of the drive motors, carrying capacities, and remaining battery levels of the mobile objects, and thus it is possible to achieve effects similar to the above-described effects of the first and second example embodiments.

[Physical Configuration]

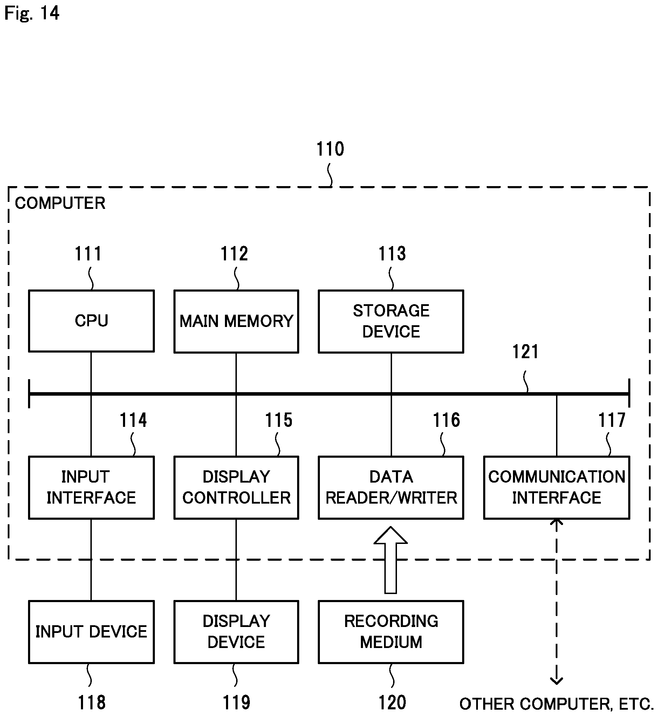

Here, a computer that realizes a mobile object control apparatus by executing the program according to example embodiments 1 and 2 and a modified example 1 will be described with reference to FIG. 14. FIG. 14 is a block diagram showing an example of a computer that realizes the mobile object control apparatus according to example embodiments 1 and 2 and a modified example 1 of the invention.

As shown in FIG. 14, a computer 110 includes a CPU (Central Processing Unit) 111, a main memory 112, a storage device 113, an input interface 114, a display controller 115, a data reader/writer 116, and a communications interface 117. These units are each connected so as to be capable of performing data communications with each other through a bus 121. Note that the computer 110 may include a GPU (Graphics Processing Unit) or an FPGA (Field-Programmable Gate Array) in addition to the CPU 111 or in place of the CPU 111.

The CPU 111 opens the program (code) according to this example embodiment, which has been stored in the storage device 113, in the main memory 112 and performs various operations by executing the program in a predetermined order. The main memory 112 is typically a volatile storage device such as a DRAM (Dynamic Random Access Memory). Also, the program according to this example embodiment is provided in a state being stored in a computer-readable recording medium 120. Note that the program according to this example embodiment may be distributed on the Internet, which is connected through the communications interface 117. Note that the recording medium 120 is a non-volatile recording medium.

Also, other than a hard disk drive, a semiconductor storage device such as a flash memory can be given as a specific example of the storage device 113. The input interface 114 mediates data transmission between the CPU 111 and an input device 118, which may be a keyboard or mouse. The display controller 115 is connected to a display device 119, and controls display on the display device 119.

The data reader/writer 116 mediates data transmission between the CPU 111 and the recording medium 120, and executes reading of a program from the recording medium 120 and writing of processing results in the computer 110 to the recording medium 120. The communications interface 117 mediates data transmission between the CPU 111 and other computers.

Also, general-purpose semiconductor storage devices such as CF (Compact Flash (registered trademark)) and SD (Secure Digital), a magnetic recording medium such as a Flexible Disk, or an optical recording medium such as a CD-ROM (Compact Disk Read-Only Memory) can be given as specific examples of the recording medium 120.

Also, instead of a computer in which a program is installed, the mobile object control apparatus 10 according to this example embodiment can also be realized by using hardware corresponding to each unit. Furthermore, a portion of the mobile object control apparatus 10 may be realized by a program, and the remaining portion realized by hardware.

Although the invention has been described above with reference to the example embodiments above, the invention is not limited to the above example embodiments.

INDUSTRIAL APPLICABILITY

As described above, according to the invention, it is possible to extend the lifespan of a mobile object capable of avoiding collisions. The invention is useful in a field in which a mobile object control is required.

LIST OF REFERENCE SIGNS

| | | |
|---|---|---|
| 10 | Mobile object control apparatus | |
| 11 | Estimation unit | |
| 12 | Calculation unit | |
| 13 | Communication unit | |
| 14 | Instruction unit | |
| 15 | Collision estimation unit | |
| 16 | Arrival time estimation unit | |
| 17 | Passage estimation unit | |
| 18 | Collision avoidance speed calculation unit | |
| 19 | Selection unit | |
| 20, 20m | Mobile object | |
| 21 | Communication unit | |
| 22 | Sensor unit | |
| 23 | Position estimation unit | |
| 24 | Movement control unit | |
| 25 | Movement unit | |
| 26 | Drive motor | |
| 27 | Battery | |
| 28 | Temperature sensor | |
| 100, 100a, 100b | System | |
| 110 | Computer | |
| 111 | CPU | |
| 112 | Main memory | |
| 113 | Storage device | |
| 114 | Input interface | |
| 115 | Display controller | |
| 116 | Data reader/writer | |
| 117 | Communication interface | |
| 118 | Input device | |
| 119 | Display device | |
| 120 | Recording medium | |
| 121 | Bus | |

**Claims**

1. A mobile object control apparatus (10) comprising:

an estimation means (11) being configured to estimate whether or not a first mobile object and a second mobile object that is highly likely to collide with the first mobile object will collide with each other at an intersection, wherein the estimation means (11) is configured to calculate a first arrival time at which the first mobile object will arrive at the intersection and a second arrival time at which the second mobile object will arrive at the intersection, using position information indicating a position, speed information indicating a speed, intersection position information indicating a position of the intersection, and communication delay time information indicating a delay time of communication, for each of the first mobile object and the second mobile object;
a calculation means (12) being configured to calculate, if it is estimated that the first mobile object and the second mobile object will collide with each other at the intersection, a speed of the first mobile object and a speed of the second mobile object at which a collision at the intersection is avoidable, based on a collision avoidance condition set in advance,
wherein the calculation means (12) includes:

a first calculation means being configured to calculate, if it is estimated that the first mobile object and the second mobile object will collide with each other at the intersection, a speed of the first mobile object and a speed of the second mobile object at which a collision at the intersection is avoidable, based on distance information indicating a distance from the first mobile object to the second mobile object by way of the intersection, braking distance information indicating a braking distance of the first mobile object, and a collision avoidance condition expressed using speed information and communication delay times of the first mobile object and the second mobile object, and
a second calculation means being configured to calculate, if it is estimated that the first mobile object and the second mobile object will collide with each other at the intersection, a speed of the first mobile object and a speed of the second mobile object at which a collision at the intersection is avoidable, based on the distance information, braking distance information indicating a braking distance of the second mobile object, and a collision avoidance condition expressed using the speed information and the communication delay times of the first mobile object and the second mobile object;
a selection means (19) being configured to select the speed of the first mobile object and the speed of the second mobile object calculated by the calculation means (12), based on surrounding temperatures of drive motors of the first mobile object and the second mobile object, or carrying capacities of the first mobile object and the second mobile object, or both the surrounding temperatures and the carrying capacities,
an instruction means (14) being configured to generate instruction information for setting the moving speeds of the first mobile object and the second mobile object using the speeds selected by the selection means (19); and

a communication means (13) being configured to transmit the instruction information to the first mobile object and the second mobile object;

**characterized in that** the selection means (19) is configured to select the speeds calculated by the first calculation means or the speeds calculated by the second calculation means, based on a magnitude relationship between the surrounding temperatures of the drive motors of the first mobile object and the second mobile object, if the surrounding temperature of the drive motor of the first mobile object or the second mobile object is higher than or equal to a first threshold value for determining a temperature set in advance, and to select the speeds calculated by the first calculation means or the speeds calculated by the second calculation means, based on a magnitude relationship between the carrying capacities of the first mobile object and the second mobile object, if the surrounding temperatures of the drive motors of the first mobile object and the second mobile object are lower than the first threshold.

2. The mobile object control apparatus (10) according to claim 1,

the selection means (19) is configured to select the speeds calculated by the first calculation means or the speeds calculated by the second calculation means, based on the magnitude relationship between the surrounding temperatures of the drive motors of the first mobile object and the second mobile object, if the surrounding temperature of the drive motor of the first mobile object or the second mobile object is higher than or equal to a first threshold for determining a temperature set in advance, and a remaining battery level of the first mobile object or the second mobile object is higher than or equal to a second threshold for determining a remaining battery level set in advance, to select the speeds calculated by the first calculation means or the speeds calculated by the second calculation means, based on the magnitude relationship between the carrying capacities of the first mobile object and the second mobile object, if the surrounding temperatures of the drive motors of the first mobile object and the second mobile object are not higher than or equal to the first threshold, and the remaining battery levels of the first mobile object and the second mobile object are higher than or equal to the second threshold, and to select the speeds calculated by the first calculation means or the speeds calculated by the second calculation means, based on a magnitude relationship between the remaining battery levels of the first mobile object and the second mobile object, if the remaining battery level of the first mobile object or the second mobile object is not higher than or equal to the second threshold.

3. A mobile object comprising the mobile object control apparatus (10) of claim 1 or 2.

4. A system that performs moving control of a mobile object, comprising:

the mobile object control apparatus (10) of claim 1 or 2; and a movement control means (24) for moving the mobile object to a target location using the received instruction information by controlling a movement means (25).

5. A mobile object control method comprising:

estimating whether or not a first mobile object and a second mobile object that is highly likely to collide with the first mobile object will collide with each other at an intersection, wherein estimating comprises calculating a first arrival time at which the first mobile object will arrive at the intersection and a second arrival time at which the second mobile object will arrive at the intersection, using position information indicating a position, speed information indicating a speed, intersection position information indicating a position of the intersection, and communication delay time information indicating a delay time of communication, for each of the first mobile object and the second mobile object, and estimating whether or not the first mobile object and the second mobile object will collide at the intersection; calculating, if it is estimated that the first mobile object and the second mobile object will collide with each other at the intersection, a speed of the first mobile object and a speed of the second mobile object at which a collision at the intersection is avoidable, based on a collision avoidance condition set in advance, wherein calculating includes:

calculating a first speed set including, if it is estimated that the first mobile object and the second mobile object will collide with each other at the intersection, a speed of the first mobile object and a speed of the second mobile object at which a collision at the intersection is avoidable, based on distance information indicating a distance from the first mobile object to the second mobile object by way of the intersection, braking distance information indicating a braking distance of the first mobile object, and a collision avoidance condition expressed using speed information and communication delay times of the first mobile object and the second mobile object, and

calculating a second speed set including, if it is estimated that the first mobile object and the second mobile object will collide with each other at the intersection, a speed of the first mobile object and a speed of the second mobile object at which a collision at the intersection is avoidable, based on the distance information, braking distance information indicating a braking distance of the second mobile object, and a collision avoidance condition expressed using the speed information and the communication delay times of the first mobile object and the second mobile obj ect;

selecting the calculated speed of the first mobile object and the calculated speed of the second mobile object, based on surrounding temperatures of drive motors of the first mobile object and the second mobile object, or carrying capacities of the first mobile object and the second mobile object, or both the surrounding temperatures and the carrying capacities,

generating instruction information for setting the moving speeds of the first mobile object and the second mobile object using the first speed set or the second speed set;

transmitting the instruction information to the first mobile object and the second mobile object; and

moving the mobile object to a target location using the received instruction information;

**characterized in that** selecting comprises selecting the first speed set or the second speed set, based on a magnitude relationship between the surrounding temperatures of the drive motors of the first mobile object and the second mobile object, if the surrounding temperature of the drive motor of the first mobile object or the second mobile object is higher than or equal to a first threshold value for determining a temperature set in advance, and

selecting the first speed set or the second speed set, based on a magnitude relationship between the carrying capacities of the first mobile object and the second mobile object, if the surrounding temperatures of the drive motors of the first mobile object and the second mobile object are lower than the first threshold.

6. A program including instructions that cause a computer to:

estimate whether or not a first mobile object and a second mobile object that is highly likely to collide with the first mobile object will collide with each other at an intersection,

wherein the computer is caused to estimate by calculating a first arrival time at which the first mobile object will arrive at the intersection and a second arrival time at which the second mobile object will arrive at the intersection, using position information indicating a position, speed information indicating a speed, intersection position information indicating a position of the intersection, and communication delay time information indicating a delay time of communication, for each of the first mobile object and the second mobile object, and estimating whether or not the first mobile object and the second mobile object will collide at the intersection;

calculate, if it is estimated that the first mobile object and the second mobile object will collide with each other at the intersection, a speed of the first mobile object and a speed of the second mobile object at which a collision at the intersection is avoidable, based on a collision avoidance condition set in advance

wherein the computer is caused to calculate by performing:

calculating a first speed set, if it is estimated that the first mobile object and the second mobile object will collide with each other at the intersection, a speed of the first mobile object and a speed of the second mobile object at which a collision at the intersection is avoidable, based on distance information indicating a distance from the first mobile object to the second mobile object by way of the intersection, braking distance information indicating a braking distance of the first mobile object, and a collision avoidance condition expressed using speed information and communication delay times of the first mobile object and the second mobile object, and

calculating a second speed set, if it is estimated that the first mobile object and the second mobile object will collide with each other at the intersection, a speed of the first mobile object and a speed of the second mobile object at which a collision at the intersection is avoidable, based on the distance information, braking distance information indicating a braking distance of the second mobile object, and a collision avoidance condition expressed using the speed information and the communication delay times of the first mobile object and the second mobile object;

select the calculated speed of the first mobile object and the calculated speed of the second mobile object, based on surrounding temperatures of drive motors of the first mobile object and the second mobile object, or carrying capacities of the first mobile object and the second mobile object, or both the surrounding temperatures and the carrying capacities,

generate information for setting the moving speeds of the first mobile object and the second mobile object using the first speed set or the second speed set;

transmit the instruction information to the first mobile object and the second mobile object; and

move the mobile object to a target location using the received instruction information;

> **characterized in that** the computer is caused to select by selecting the first speed set or the second speed set, based on a magnitude relationship between the surrounding temperatures of the drive motors of the first mobile object and the second mobile object, if the surrounding temperature of the drive motor of the first mobile object or the second mobile object is higher than or equal to a first threshold value for determining a temperature set in advance, and
>
> to select the first speed set or the second speed set, based on a magnitude relationship between the carrying capacities of the first mobile object and the second mobile object, if the surrounding temperatures of the drive motors of the first mobile object and the second mobile object are lower than the first threshold.

**Patentansprüche**

1. Steuervorrichtung (10) für bewegliche Körper, die aufweist:

   ein Schätzmittel (11), das konfiguriert ist, abzuschätzen, ob ein erster beweglicher Körper und ein zweiter beweglicher Körper, der mit hoher Wahrscheinlichkeit mit dem ersten beweglichen Körper zusammenstößt, an einem Schnittpunkt zusammenstoßen oder nicht, wobei das Schätzmittel (11) konfiguriert ist, eine erste Ankunftszeit, an der der erste bewegliche Körper an dem Schnittpunkt ankommt, und eine zweite Ankunftszeit, an der der zweite bewegliche Körper am Schnittpunkt ankommt, unter Verwendung von Positionsinformationen, die eine Position angeben, Geschwindigkeitsinformationen, die eine Geschwindigkeit angeben, Schnittpunktpositionsinformationen, die eine Position des Schnittpunkts angeben und Kommunikationsverzögerungszeitinformationen, die eine Verzögerungszeit der Kommunikation angeben, für einen jeden von dem ersten beweglichen Körper und dem zweiten beweglichen Körper zu berechnen;
   ein Berechnungsmittel (12), das konfiguriert ist, wenn geschätzt wird, dass der erste bewegliche Körper und der zweite bewegliche Körper miteinander an dem Schnittpunkt zusammenstoßen, eine Geschwindigkeit des ersten beweglichen Körpers und eine Geschwindigkeit des zweiten beweglichen Körpers, bei denen ein Zusammenstoß am Schnittpunkt vermeidbar ist, basierend auf einer vorab festgelegten Bedingung zur Vermeidung des Zusammenstoßes zu berechnen,
   wobei das Berechnungsmittel (12): aufweist:

   ein erstes Berechnungsmittel, das konfiguriert ist, wenn geschätzt wird, dass der erste bewegliche Körper und der zweite bewegliche Körper miteinander am Schnittpunkt zusammenstoßen, eine Geschwindigkeit des ersten beweglichen Körpers und eine Geschwindigkeit des zweiten beweglichen Körpers, bei denen ein Zusammenstoß am Schnittpunkt vermeidbar ist, basierend auf Abstandsinformationen, die einen Abstand von dem ersten beweglichen Körper zu dem zweiten beweglichen Körper über den Schnittpunkt angeben, Bremsabstandsinformationen, die einen Bremsabstand des ersten beweglichen Körpers angeben, und einer Bedingung zur Vermeidung eines Zusammenstoßes, die unter Verwendung von Geschwindigkeitsinformationen und Kommunikationsverzögerungszeiten des ersten beweglichen Körpers und des zweiten beweglichen Körpers ausgedrückt wird, zu berechnen, und

ein zweites Berechnungsmittel, das konfiguriert ist, wenn geschätzt wird, dass der erste bewegliche Körper und der zweite bewegliche Körper miteinander am Schnittpunkt zusammenstoßen, eine Geschwindigkeit des ersten beweglichen Körpers und eine Geschwindigkeit des zweiten beweglichen Körpers, bei denen ein Zusammenstoß an einem Schnittpunkt vermeidbar ist, basierend auf den Abstandsinformationen, Bremsabstandsinformationen, die einen Bremsabstand des zweiten beweglichen Körpers angeben, und einer Bedingung zur Vermeidung eines Zusammenstoßes, die unter Verwendung von Geschwindigkeitsinformationen und den Kommunikationsverzögerungszeiten des ersten beweglichen Körpers und des zweiten beweglichen Körpers ausgedrückt wird, zu berechnen;

ein Auswahlmittel (19), das konfiguriert ist, die Geschwindigkeit des ersten beweglichen Körpers und die Geschwindigkeit des zweiten beweglichen Körpers, die von dem Berechnungsmittel (12) berechnet wurden, basierend auf Umgebungstemperaturen von Antriebsmotoren des ersten beweglichen Körpers und des zweiten beweglichen Körpers oder Tragekapazitäten des ersten beweglichen Körpers und des zweiten beweglichen Körpers oder beides von den Umgebungstemperaturen und den Tragekapazitäten auszuwählen,

ein Anweisungsmittel (14), das konfiguriert ist, Anweisungsinformationen zum Festlegen der Bewegungsgeschwindigkeiten des ersten beweglichen Körpers und des zweiten beweglichen Körpers unter Verwendung der vom Auswahlmittel (19) ausgewählten Geschwindigkeiten festzulegen; und

ein Kommunikationsmittel (13), das konfiguriert ist, die Anweisungsinformationen an den ersten beweglichen Körper und den zweiten beweglichen Körper zu übertragen; **dadurch gekennzeichnet, dass** das Auswahlmittel (19) konfiguriert ist, die von dem ersten Berechnungsmittel berechneten Geschwindigkeiten oder die von dem zweiten Berechnungsmittel berechneten Geschwindigkeiten basierend auf einer Größenbeziehung zwischen den Umgebungstemperaturen der Antriebsmotoren des ersten beweglichen Körpers und des zweiten beweglichen Körpers auszuwählen, wenn die Umgebungstemperatur des Antriebsmotors des ersten beweglichen Körpers oder des zweiten beweglichen Körpers größer oder gleich einem ersten Grenzwert zum Bestimmen einer vorab festgelegten Temperatur ist, und

die von dem ersten Berechnungsmittel berechneten Geschwindigkeiten oder die vom zweiten Berechnungsmittel berechneten Geschwindigkeiten basierend auf einer Größenbeziehung zwischen den Tragekapazitäten des ersten beweglichen Körpers und des zweiten beweglichen Körpers auszuwählen, wenn die Umgebungstemperaturen der Antriebsmotoren des ersten beweglichen Körpers und des zweiten beweglichen Körpers niedriger als der erste Grenzwert sind.

2. Steuervorrichtung (10) für bewegliche Körper nach Anspruch 1, wobei:

das Auswahlmittel (19) konfiguriert ist, die von dem ersten Berechnungsmittel berechneten Geschwindigkeiten oder von dem zweiten Berechnungsmittel berechneten Geschwindigkeiten basierend auf der Größenbeziehung zwischen den Umgebungstemperaturen der Antriebsmotoren des ersten beweglichen Körpers und des zweiten beweglichen Körpers auszuwählen, wenn die Umgebungstemperatur des Antriebsmotors des ersten beweglichen Körpers oder des zweiten beweglichen Körpers größer oder gleich einem ersten Grenzwert zum Bestimmen einer vorab festgelegten Temperatur ist, und eine verbleibende Batterieladung des ersten beweglichen Körpers oder des zweiten beweglichen Körpers größer oder gleich als der vorab festgelegte zweite Grenzwert zum Bestimmen einer verbleibenden Batterieladung ist,

die von dem ersten Berechnungsmittel berechneten Geschwindigkeiten oder die von dem zweiten Berechnungsmittel berechneten Geschwindigkeiten basierend auf der Größenbeziehung zwischen den Tragekapazitäten des ersten beweglichen Körpers und des zweiten beweglichen Körpers auszuwählen, wenn die Umgebungstemperaturen der Antriebsmotoren des ersten beweglichen Körpers und des zweiten beweglichen Körpers nicht größer als oder gleich dem ersten Grenzwert sind, und die verbleibenden Batterieladungen des ersten beweglichen Körpers und des zweiten beweglichen Körpers größer als oder gleich dem zweiten Grenzwert sind, und

die von dem ersten Berechnungsmittel berechneten Geschwindigkeiten oder die vom zweiten Berechnungsmittel berechneten Geschwindigkeiten basierend auf einer Größenbeziehung zwischen den verbleibenden Batterieladungen des ersten beweglichen Körpers und des zweiten beweglichen Körpers auszuwählen, wenn die verbleibende Batterieladung des ersten beweglichen Körpers oder des zweiten beweglichen Körpers nicht größer als oder gleich dem Grenzwert ist.

3. Beweglicher Körper, der die Steuervorrichtung (10) für bewegliche Körper nach Anspruch 1 oder 2 aufweist.

4. System, das eine Bewegungssteuerung eines beweglichen Körpers durchführt, das aufweist:

die Steuervorrichtung (10) für bewegliche Körper nach Anspruch 1 oder 2; und
ein Bewegungssteuerungsmittel (24), um den beweglichen Körper an eine Zielposition unter Verwendung der empfangenen Anweisungsinformationen zum Steuern eines Bewegungsmittels (25) zu bewegen.

5. Steuerverfahren für bewegliche Körper, das aufweist:

Schätzen, ob ein erster beweglicher Körper und ein zweiter beweglicher Körper, der mit hoher Wahrscheinlichkeit mit dem ersten beweglichen Körper zusammenstößt, an einem Schnittpunkt zusammenstoßen werden,
wobei das Schätzen das Berechnen einer ersten Ankunftszeit, an der der erste bewegliche Körper am Schnittpunkt ankommt, und einer zweiten Ankunftszeit, an der der zweite bewegliche Körper am Schnittpunkt ankommt, unter Verwendung von Positionsinformationen, die eine Position angeben, Geschwindigkeitsinformationen, die eine Geschwindigkeit angeben, Schnittpunktpositionsinformationen, die eine Position des Schnittpunkts angeben, und Kommunikationsverzögerungszeitinformationen, die eine Verzögerungszeit der Kommunikation angeben, für einen jeden von dem ersten beweglichen Körper und dem zweiten beweglichen Körper, und Schätzen, ob der erste bewegliche Körper und der zweite bewegliche Körper am Schnittpunkt zusammenstoßen oder nicht aufweist;
Berechnen, wenn geschätzt wird, dass der erste bewegliche Körper und der zweite bewegliche Körper miteinander am Schnittpunkt zusammenstoßen, einer Geschwindigkeit des ersten beweglichen Körpers und einer Geschwindigkeit des zweiten beweglichen Körpers, bei denen ein Zusammenstoß am Schnittpunkt vermeidbar ist, basierend auf einer vorab festgelegten Bedingung zur Vermeidung des Zusammenstoßes,
wobei die Berechnung aufweist:

Berechnen eines ersten Geschwindigkeitssatzes, der, wenn geschätzt wird, dass der erste bewegliche Körper und der zweite bewegliche Körper miteinander am Schnittpunkt zusammenstoßen, eine Geschwindigkeit des ersten beweglichen Körpers und eine Geschwindigkeit des zweiten beweglichen Körpers aufweist, bei denen ein Zusammenstoß am Schnittpunkt vermeidbar ist, basierend auf Abstandsinformationen, die einen Abstand von dem ersten beweglichen Körper zum zweiten beweglichen Körper über den Schnittpunkt angeben, Bremsabstandsinformationen, die einen Bremsabstand des ersten beweglichen Körpers angeben, und eine Bedingung zur Vermeidung eines Zusammenstoßes, die unter Verwendung von Geschwindigkeitsinformationen und Kommunikationsverzögerungszeiten des ersten beweglichen Körpers und des zweiten beweglichen Körpers ausgedrückt wird, und
Berechnen eines zweiten Geschwindigkeitssatzes, der, wenn geschätzt wird, dass der erste bewegliche Körper und der zweite bewegliche Körper miteinander an dem Schnittpunkt zusammenstoßen, eine Geschwindigkeit des ersten beweglichen Körpers und eine Geschwindigkeit des zweiten beweglichen Körpers aufweist, bei denen ein Zusammenstoß an dem Schnittpunkt vermeidbar ist, basierend auf Abstandsinformationen, Bremsabstandsinformationen, die einen Bremsabstand des zweiten beweglichen Körpers angeben, und einer Bedingung zur Vermeidung eines Zusammenstoßes, die unter Verwendung von Geschwindigkeitsinformationen und den Kommunikationsverzögerungszeiten des ersten beweglichen Körpers und des zweiten beweglichen Körpers ausgedrückt wird;
Auswählen der berechneten Geschwindigkeit des ersten beweglichen Körpers und der berechneten Geschwindigkeit des zweiten beweglichen Körpers basierend auf Umgebungstemperaturen von Antriebsmotoren des ersten beweglichen Körpers und des zweiten beweglichen Körpers oder Tragekapazitäten des ersten beweglichen Körpers und des zweiten beweglichen Körpers oder beides von den Umgebungstemperaturen und den Tragekapazitäten,
Erzeugen von Anweisungsinformationen zum Festlegen der Bewegungsgeschwindigkeiten des ersten beweglichen Körpers und des zweiten beweglichen Körpers unter Verwendung des ersten Geschwindigkeitssatzes oder des zweiten Geschwindigkeitssatzes;

Übertragen der Anweisungsinformationen an den ersten beweglichen Körper und den zweiten beweglichen Körper; und

Bewegen des beweglichen Körpers an eine Zielposition unter Verwendung der empfangenen Anweisungsinformationen;

**dadurch gekennzeichnet, dass** das Auswählen das Auswählen des ersten Geschwindigkeitssatzes oder des zweiten Geschwindigkeitssatzes basierend auf einer Größenbeziehung zwischen den Umgebungstemperaturen der Antriebsmotoren des ersten beweglichen Körpers und des zweiten beweglichen Körpers aufweist, wenn die Umgebungstemperatur des Antriebsmotors des ersten beweglichen Körpers oder des zweiten beweglichen Körpers größer oder gleich einem ersten Grenzwert zum Bestimmen einer vorab festgelegten Temperatur ist, und

Auswählen des ersten Geschwindigkeitssatzes oder des zweiten Geschwindigkeitssatzes basierend auf einer Größenbeziehung zwischen den Tragekapazitäten des ersten beweglichen Körpers und des zweiten beweglichen Körpers, wenn die Umgebungstemperaturen der Antriebsmotoren des ersten beweglichen Körpers und des zweiten beweglichen Körpers niedriger als der erste Grenzwert sind.

6. Programm, das Anweisungen aufweist, die einen Computer veranlassen zu:

schätzen, ob ein erster beweglicher Körper und ein zweiter beweglicher Körper, der mit hoher Wahrscheinlichkeit mit dem ersten beweglichen Körper zusammenstößt, an einem Schnittpunkt zusammenstoßen werden oder nicht,

wobei der Computer veranlasst wird, durch Berechnung eine erste Ankunftszeit, an der der erste bewegliche Körper am Schnittpunkt ankommt, und eine zweiten Ankunftszeit, an der der zweite bewegliche Körper am Schnittpunkt ankommt, zu schätzen unter Verwendung von Positionsinformationen, die eine Position angeben, Geschwindigkeitsinformationen, die eine Geschwindigkeit angeben, Schnittpunktpositionsinformationen, die eine Position des Schnittpunkts angeben, und Kommunikationsverzögerungszeitinformationen, die eine Verzögerungszeit der Kommunikation angeben, für einen jeden von dem ersten beweglichen Körper und dem zweiten beweglichen Körper berechnet wird und zu schätzen, ob der erste bewegliche Körper und der zweite bewegliche Körper am Schnittpunkt zusammenstoßen oder nicht;

berechnen, wenn geschätzt wird, dass der erste bewegliche Körper und der zweite bewegliche Körper miteinander an dem Schnittpunkt zusammenstoßen, einer Geschwindigkeit des ersten beweglichen Körpers und einer Geschwindigkeit des zweiten beweglichen Körpers, bei denen ein Zusammenstoß am Schnittpunkt vermeidbar ist, basierend auf einer vorab festgelegten Bedingung zur Vermeidung des Zusammenstoßes,

wobei der Computer veranlasst wird, zu berechnen, indem ausgeführt wird:

Berechnen eines ersten Geschwindigkeitssatzes, wenn geschätzt wird, dass der erste bewegliche Körper und der zweite bewegliche Körper miteinander am Schnittpunkt zusammenstoßen, mit einer Geschwindigkeit des ersten beweglichen Körpers und einer Geschwindigkeit des zweiten beweglichen Körpers, bei denen ein Zusammenstoß am Schnittpunkt vermeidbar ist, basierend auf Abstandsinformationen, die einen Abstand von dem ersten beweglichen Körper zum zweiten beweglichen Körper durch den Schnittpunkt angeben, Bremsabstandsinformationen, die einen Bremsabstand des ersten beweglichen Körpers angeben, und einer Zusammenstoßvermeidungsbedingung, die unter Verwendung von Geschwindigkeitsinformationen und Kommunikationsverzögerungszeiten des ersten beweglichen Körpers und des zweiten beweglichen Körpers ausgedrückt wird, und Berechnen eines zweiten Geschwindigkeitssatzes, wenn geschätzt wird, dass der erste bewegliche Körper und der zweite bewegliche Körper miteinander an dem Schnittpunkt zusammenstoßen, mit einer Geschwindigkeit des ersten beweglichen Körpers und einer Geschwindigkeit des zweiten beweglichen Körpers, bei denen ein Zusammenstoß am Schnittpunkt vermeidbar ist, basierend auf den Abstandsinformationen, Bremsabstandsinformationen, die einen Bremsabstand des zweiten beweglichen Körpers angeben, und einer Zusammenstoßvermeidungsbedingung, die unter Verwendung der Geschwindigkeitsinformationen und der Kommunikationsverzögerungszeiten des ersten beweglichen Körpers und des zweiten beweglichen Körpers ausgedrückt werden;

Auswählen der berechneten Geschwindigkeit des ersten beweglichen Körpers und der berechneten Geschwindigkeit des zweiten beweglichen Körpers basierend auf Umgebungstemperaturen von Antriebsmotoren des ersten beweglichen Körpers und des zweiten beweglichen Körpers oder Tragekapazitäten des ersten beweglichen Körpers und des zweiten beweglichen Körpers oder beides von den Umgebungstemperaturen und den Tragekapazitäten,

Erzeugen von Informationen zum Festlegen der Bewegungsgeschwindigkeiten des ersten beweglichen Körpers und des zweiten beweglichen Körpers unter Verwendung des ersten Geschwindigkeitssatzes oder des zweiten Geschwindigkeitssatzes;

Übertragen der Anweisungsinformationen an den ersten beweglichen Körper und den zweiten beweglichen Körper; und

Bewegen des beweglichen Körpers an eine Zielposition unter Verwendung der empfangenen Anweisungsinformationen;

**dadurch gekennzeichnet, dass** der Computer zur Auswahl veranlasst wird, indem der erste Geschwindigkeitssatz oder der zweite Geschwindigkeitssatz basierend auf einer Größenbeziehung zwischen den Umgebungstemperaturen der Antriebsmotoren des ersten beweglichen Körpers und des zweiten beweglichen Körpers ausgewählt wird, wenn die Umgebungstemperatur des Antriebsmotors des ersten beweglichen Körpers oder des zweiten beweglichen Körpers größer oder gleich einem ersten Grenzwert zum Bestimmen einer vorab festgelegten Temperatur ist, und

Auswählen des ersten Geschwindigkeitssatzes oder des zweiten Geschwindigkeitssatzes basierend auf einer Größenbeziehung zwischen den Tragekapazitäten des ersten beweglichen Körpers und des zweiten beweglichen Körpers, wenn die Umgebungstemperaturen der Antriebsmotoren des ersten beweglichen Körpers und des zweiten beweglichen Körpers niedriger als der erste Grenzwert sind.

**Revendications**

1. Appareil de commande d'objet mobile (10) comprenant :

un moyen d'estimation (11) étant configuré pour estimer si un premier objet mobile et un deuxième objet mobile présentant une forte probabilité d'entrer en collision avec le premier objet mobile entreront ou non en collision l'un avec l'autre à un carrefour, dans lequel le moyen d'estimation (11) est configuré pour calculer un premier temps d'arrivée auquel le premier objet mobile arrivera au carrefour et un deuxième temps d'arrivée auquel le deuxième objet mobile arrivera au carrefour, à l'aide d'informations de position indiquant une position, d'informations de vitesse indiquant une vitesse, d'informations de position de carrefour indiquant une position du carrefour, et d'informations de temps de retard de communication indiquant un temps de retard de communication, pour chacun du premier objet mobile et du deuxième objet mobile ;

un moyen de calcul (12) étant configuré pour calculer, s'il est estimé que le premier objet mobile et le deuxième objet mobile entreront en collision l'un avec l'autre au carrefour, une vitesse du premier objet mobile et une vitesse du deuxième objet mobile auxquelles une collision au carrefour est évitable, sur la base d'une condition d'évitement de collision définie à l'avance,

dans lequel le moyen de calcul (12) comporte :

un premier moyen de calcul configuré pour calculer, s'il est estimé que le premier objet mobile et le deuxième objet mobile entreront en collision l'un avec l'autre au carrefour, une vitesse du premier objet mobile et une vitesse du deuxième objet mobile auxquelles une collision au carrefour est évitable, sur la base d'informations de distance indiquant une distance du premier objet mobile au deuxième objet mobile en passant par le carrefour, d'informations de distance de freinage indiquant une distance de freinage du premier objet mobile, et d'une condition d'évitement de collision exprimée à l'aide d'informations de vitesse et de temps de retard de communication du premier objet mobile et du deuxième objet mobile, et

un deuxième moyen de calcul étant configuré pour calculer, s'il est estimé que le premier objet mobile et le deuxième objet mobile entreront en collision l'un avec l'autre au carrefour, une vitesse du premier objet mobile et une vitesse du deuxième objet mobile auxquelles une collision au carrefour est évitable, sur la base d'informations de distance, d'informations de distance de freinage indiquant une distance de freinage du deuxième objet mobile, et d'une condition d'évitement de collision exprimée à l'aide des informations de vitesse et des temps de retard de communication du premier objet mobile et du deuxième objet mobile ;

un moyen de sélection (19) configuré pour sélectionner la vitesse du premier objet mobile et la vitesse du deuxième objet mobile calculées par le moyen de calcul (12), sur la base de températures ambiantes de moteurs d'entraînement du premier objet mobile et du deuxième objet mobile, ou de capacités de charge du premier objet mobile et du deuxième objet mobile, ou à la fois des températures ambiantes et des capacités de charge,

un moyen d'instruction (14) configuré pour générer des informations d'instruction pour définir les vitesses de déplacement du premier objet mobile et du deuxième objet mobile à l'aide des vitesses sélectionnées par le moyen de sélection (19) ; et

un moyen de communication (13) configuré pour transmettre les informations d'instruction au premier objet mobile et au deuxième objet mobile ;

**caractérisé en ce que** le moyen de sélection (19) est configuré pour sélectionner les vitesses calculées par le premier moyen de calcul ou les vitesses calculées par le deuxième moyen de calcul, sur la base d'une relation de grandeur entre les températures ambiantes des moteurs d'entraînement du premier objet mobile et du deuxième objet mobile, si la température ambiante du moteur d'entraînement du premier objet mobile ou du deuxième objet mobile est supérieure ou égale à une première valeur de seuil pour déterminer une température définie à l'avance, et

sélectionner les vitesses calculées par le premier moyen de calcul ou les vitesses calculées par le deuxième moyen de calcul, sur la base d'une relation de grandeur entre les capacités de charge du premier objet mobile et du deuxième objet mobile, si les températures ambiantes des moteurs d'entraînement du premier objet mobile et du deuxième objet mobile sont inférieures au premier seuil.

**2.** Appareil de commande d'objet mobile (10) selon la revendication 1, dans lequel

le moyen de sélection (19) est configuré pour sélectionner les vitesses calculées par le premier moyen de calcul ou les vitesses calculées par le deuxième moyen de calcul, sur la base de la relation de grandeur entre les températures ambiantes des moteurs d'entraînement du premier objet mobile et du deuxième objet mobile, si la température ambiante du moteur d'entraînement du premier objet mobile ou du deuxième objet mobile est supérieure ou égale à un premier seuil pour déterminer une température définie à l'avance, et un niveau de batterie restant du premier objet mobile ou du deuxième objet mobile est supérieur ou égal à un deuxième seuil pour déterminer un niveau de batterie restant défini à l'avance,

sélectionner les vitesses calculées par le premier moyen de calcul ou les vitesses calculées par le deuxième moyen de calcul, sur la base de la relation de grandeur entre les capacités de charge du premier objet mobile et du deuxième objet mobile, si les températures ambiantes des moteurs d'entraînement du premier objet mobile et du deuxième objet mobile ne sont pas supérieures ou égales au premier seuil, et les niveaux de batterie restants du premier objet mobile et du deuxième objet mobile sont supérieurs ou égaux au deuxième seuil, et

sélectionner les vitesses calculées par le premier moyen de calcul ou les vitesses calculées par le deuxième moyen de calcul, sur la base de la relation de grandeur entre les niveaux de batterie restants du premier objet mobile et du deuxième objet mobile, si le niveau de batterie restant du premier objet mobile ou du deuxième objet mobile n'est pas supérieur ou égal au deuxième seuil.

**3.** Objet mobile comprenant l'appareil de commande d'objet mobile (10) selon la revendication 1 ou 2.

**4.** Système qui réalise une commande de déplacement d'un objet mobile, comprenant :

l'appareil de commande d'objet mobile (10) selon la revendication 1 ou 2 ; et

un moyen de commande de déplacement (24) pour déplacer l'objet mobile vers un emplacement cible à l'aide des informations d'instruction reçues par la commande d'un moyen de déplacement (25).

**5.** Procédé de commande d'objet mobile comprenant :

l'estimation si un premier objet mobile et un deuxième objet mobile présentant une forte probabilité d'entrer en collision avec le premier objet mobile entreront ou non en collision l'un avec l'autre à un carrefour,

dans lequel l'estimation comprend le calcul d'un premier temps d'arrivée auquel le premier objet mobile arrivera au carrefour et d'un deuxième temps d'arrivée auquel le deuxième objet mobile arrivera au carrefour, à l'aide d'informations de position indiquant une position, d'informations de vitesse indiquant une vitesse, d'informations de position de carrefour indiquant une position du carrefour, et d'informations de temps de retard de communication indiquant un temps de retard de communication, pour chacun du premier objet mobile et du deuxième objet mobile, et l'estimation si le premier objet mobile et le deuxième objet mobile entreront ou non en collision au carrefour ;

le calcul, s'il est estimé que le premier objet mobile et le deuxième objet mobile entreront en collision l'un avec l'autre au carrefour, d'une vitesse du premier objet mobile et d'une vitesse du deuxième objet mobile auxquelles une collision au carrefour est évitable, sur la base d'une condition d'évitement de collision définie à l'avance,

dans lequel le calcul comporte :

le calcul d'un premier ensemble de vitesses comportant, s'il est estimé que le premier objet mobile et le deuxième objet mobile entreront en collision l'un avec l'autre au carrefour, une vitesse du premier objet mobile et une vitesse du deuxième objet mobile auxquelles une collision au carrefour est évitable, sur la base d'informations de distance indiquant une distance du premier objet mobile au deuxième objet mobile en passant par le carrefour, d'informations de distance de freinage indiquant une distance de freinage du premier objet mobile, et d'une condition d'évitement de collision exprimée à l'aide d'informations de vitesse et de temps de retard de communication du premier objet mobile et du deuxième objet mobile, et

le calcul d'un deuxième ensemble de vitesses comportant, s'il est estimé que le premier objet mobile et le deuxième objet mobile entreront en collision l'un avec l'autre au carrefour, une vitesse du premier objet mobile et une vitesse du deuxième objet mobile auxquelles une collision au carrefour est évitable, sur la base des informations de distance, d'informations de distance de freinage indiquant une distance de freinage du deuxième objet mobile, et d'une condition d'évitement de collision exprimée à l'aide des informations de vitesse et des temps de retard de communication du premier objet mobile et du deuxième objet mobile ;

la sélection de la vitesse calculée du premier objet mobile et de la vitesse calculée du deuxième objet mobile, sur la base de températures ambiantes de moteurs d'entraînement du premier objet mobile et du deuxième objet mobile, ou de capacités de charge du premier objet mobile et du deuxième objet mobile, ou à la fois des températures ambiantes et des capacités de charge,

la génération d'informations d'instruction pour définir les vitesses de déplacement du premier objet mobile et du deuxième objet mobile à l'aide du premier ensemble de vitesses ou du deuxième ensemble de vitesses ;

la transmission des informations d'instruction au premier objet mobile et au deuxième objet mobile ; et

le déplacement de l'objet mobile jusqu'à un emplacement cible à l'aide des informations d'instruction reçues ;

**caractérisé en ce que** la sélection comprend la sélection du premier ensemble de vitesses ou du deuxième ensemble de vitesses, sur la base d'une relation de grandeur entre les températures ambiantes des moteurs d'entraînement du premier objet mobile et du deuxième objet mobile, si la température ambiante du moteur d'entraînement du premier objet mobile ou du deuxième objet mobile est supérieure ou égale à une première valeur de seuil pour déterminer une température définie à l'avance, et la sélection du premier ensemble de vitesses ou du deuxième ensemble de vitesses, sur la base d'une relation de grandeur entre les capacités de charge du premier objet mobile et du deuxième objet mobile, si les températures ambiantes des moteurs d'entraînement du premier objet mobile et du deuxième objet mobile sont inférieures au premier seuil.

6. Programme comportant des instructions qui amènent un ordinateur à :

estimer si un premier objet mobile et un deuxième objet mobile présentant une forte probabilité d'entrer en collision avec le premier objet mobile entreront ou non en collision l'un avec l'autre à un carrefour,

dans lequel l'ordinateur est amené à estimer par le calcul d'un premier temps d'arrivée auquel le premier objet mobile arrivera au carrefour et d'un deuxième temps d'arrivée auquel le deuxième objet mobile arrivera au carrefour, à l'aide d'informations de position indiquant une position, d'informations de vitesse indiquant une vitesse, d'informations de position de carrefour indiquant une position du carrefour, et d'informations de temps de retard de communication indiquant un temps de retard de communication, pour chacun du premier objet mobile et du deuxième objet mobile, et l'estimation si le premier objet mobile et le deuxième objet mobile entreront ou non en collision au carrefour ;

calculer, s'il est estimé que le premier objet mobile et le deuxième objet mobile entreront en collision l'un avec l'autre au carrefour, une vitesse du premier objet mobile et une vitesse du deuxième objet mobile auxquelles une collision au carrefour est évitable, sur la base d'une condition d'évitement de collision définie à l'avance,

dans lequel l'ordinateur est amené à calculer par la réalisation de ce qui suit :

le calcul d'un premier ensemble de vitesses comprenant, s'il est estimé que le premier objet mobile et le deuxième objet mobile entreront en collision l'un avec l'autre au carrefour, une vitesse du premier objet mobile et une vitesse du deuxième objet mobile auxquelles une collision au carrefour est évitable, sur la base d'informations de distance indiquant une distance du premier objet mobile au deuxième objet mobile en passant par le carrefour, d'informations de distance de freinage indiquant une distance de freinage du premier objet mobile, et d'une condition d'évitement de collision exprimée à l'aide d'informations de vitesse et de temps de retard de communication du premier objet mobile et du deuxième objet mobile, et

le calcul d'un deuxième ensemble de vitesses comprenant, s'il est estimé que le premier objet mobile et le deuxième objet mobile entreront en collision l'un avec l'autre au carrefour, une vitesse du premier objet mobile et une vitesse du deuxième objet mobile auxquelles une collision au carrefour est évitable, sur la base des informations de distance, d'informations de distance de freinage indiquant une distance de freinage du deuxième objet mobile, et d'une condition d'évitement de collision exprimée à l'aide des informations de vitesse et des temps de retard de communication du premier objet mobile et du deuxième objet mobile ;

sélectionner la vitesse calculée du premier objet mobile et la vitesse calculée du deuxième objet mobile, sur la base de températures ambiantes de moteurs d'entraînement du premier objet mobile et du deuxième objet mobile, ou de capacités de charge du premier objet mobile et du deuxième objet mobile, ou à la fois des températures ambiantes et des capacités de charge,

générer des informations pour définir les vitesses de déplacement du premier objet mobile et du deuxième objet mobile à l'aide du premier ensemble de vitesses ou du deuxième ensemble de vitesses ;

transmettre les informations d'instruction au premier objet mobile et au deuxième objet mobile ; et

déplacer l'objet mobile jusqu'à un emplacement cible à l'aide des informations d'instruction reçues ;

**caractérisé en ce que** l'ordinateur est amené à sélectionner par la sélection du premier ensemble de vitesses ou du deuxième ensemble de vitesses, sur la base d'une relation de grandeur entre les températures ambiantes des moteurs d'entraînement du premier objet mobile et du deuxième objet mobile, si la température ambiante du moteur d'entraînement du premier objet mobile ou du deuxième objet mobile est supérieure ou égale à une première valeur de seuil pour déterminer une température définie à l'avance, et sélectionner le premier ensemble de vitesses ou le deuxième ensemble de vitesses, sur la base d'une relation de grandeur entre les capacités de charge du premier objet mobile et du deuxième objet mobile, si les températures ambiantes des moteurs d'entraînement du premier objet mobile et du deuxième objet mobile sont inférieures au premier seuil.

Fig. 1

10

```
┌ ─ ─ ─ ─ ─ ─ ─ ─ ─ ─ ─ ─ ─ ─ ─ ─ ┐
│  MOBILE OBJECT CONTROL          │
│         APPARATUS               │
│  ┌───────────────────────────┐  │
│  │                           │  │
│  │     ESTIMATION UNIT       │──┼── 11
│  │                           │  │
│  └───────────────────────────┘  │
│                                 │
│  ┌───────────────────────────┐  │
│  │                           │  │
│  │    CALCULATION UNIT       │──┼── 12
│  │                           │  │
│  └───────────────────────────┘  │
│                                 │
│  ┌───────────────────────────┐  │
│  │                           │  │
│  │     SELECTION UNIT        │──┼── 19
│  │                           │  │
│  └───────────────────────────┘  │
└ ─ ─ ─ ─ ─ ─ ─ ─ ─ ─ ─ ─ ─ ─ ─ ─ ┘
```

Fig. 2

100a

SYSTEM

20 | 10

**MOBILE OBJECT**

| COMMUNICATION UNIT | 21 |

| SENSOR UNIT | 22 |

| POSITION ESTIMATION UNIT | 23 |

| MOVEMENT CONTROL UNIT | 24 |

MOVEMENT UNIT — 25

| DRIVE MOTOR | 26 |

| BATTERY | 27 |

| TEMPERATURE SENSOR | 28 |

20

**MOBILE OBJECT**

20

**MOBILE OBJECT**

**MOBILE OBJECT CONTROL APPARATUS**

| COMMUNICATION UNIT | 13 |

| INSTRUCTION UNIT | 14 |

ESTIMATION UNIT — 11

| COLLISION ESTIMATION UNIT | 15 |

| ARRIVAL TIME ESTIMATION UNIT | 16 |

CALCULATION UNIT — 12

| PASSAGE ESTIMATION UNIT | 17 |

| COLLISION AVOIDANCE SPEED CALCULATION UNIT | 18 |

| SELECTION UNIT | 19 |

Fig. 3

100b

SYSTEM

20m

MOBILE OBJECT
(MAIN)

| COMMUNICATION UNIT | 21 |

| INSTRUCTION UNIT | 14 |

| SENSOR UNIT | 22 |

| POSITION ESTIMATION UNIT | 23 |

| MOVEMENT CONTROL UNIT | 24 |

MOVEMENT UNIT — 25

| DRIVE MOTOR | 26 |

| BATTERY | 27 |

| TEMPERATURE SENSOR | 28 |

ESTIMATION UNIT — 11

| COLLISION ESTIMATION UNIT | 15 |

| ARRIVAL TIME ESTIMATION UNIT | 16 |

CALCULATION UNIT — 12

| PASSAGE ESTIMATION UNIT | 17 |

| COLLISION AVOIDANCE SPEED CALCULATION UNIT | 18 |

| SELECTION UNIT | 19 |

20

MOBILE OBJECT (SUB)

20

MOBILE OBJECT (SUB)

Fig. 4

Fig. 5

51

| ROUTE ID | START POINT | END POINT | PASS POINT | SHAPE | INTERSECTION |
|---|---|---|---|---|---|
| R1 | (5,3) | (5,1) | none | straight line | none |
| R2 | (8,3) | (8,1) | none | straight line | none |
| R3 | (11,3) | (11,1) | none | straight line | none |
| R4 | (17,1) | (19,23) | (17,12),(19,12) | elbow line | (17,8) |
| R5 | (21,5) | (21,19) | none | straight line | (21,8) |
| R6 | (23,5) | (23,19) | none | straight line | (23,8) |
| R7 | (1,17) | (15,23) | none | arc | none |
| R8 | (1,17) | (12,23) | none | arc | none |
| R9 | (1,17) | (9,23) | none | arc | none |
| R10 | (14,1) | (31,8) | (14,8) | elbow line | (17,8), (21,8), (23,8) |
| R11 | (1,11) | (3,11) | none | straight line | none |
| R12 | (1,8) | (3,8) | none | straight line | none |
| R13 | (1,5) | (3,8) | none | straight line | none |

Fig. 6

61

| MOBILE OBJECT ID | SETTING SPEED | BRAKING DISTANCE |
|---|---|---|
| AGV1 | 12km/h | $1/100 * v^2$ |
| AGV2 | 12km/h | $1/100 * v^2$ |
| AGV3 | 12km/h | $1/100 * v^2$ |
| AGV4 | 12km/h | $1/100 * v^2$ |
| AGV5 | 10km/h | $1/150 * v^2$ |
| AGV6 | 10km/h | $1/150 * v^2$ |
| ⋮ | ⋮ | ⋮ |

Fig. 7

71

| MOBILE OBJECT ID | COMMUNICATION DELAY TIME [s] |
|---|---|
| AGV1 | 1 |
| AGV2 | 0.2 |
| AGV3 | 10 |
| ⋮ | ⋮ |

Fig. 8

81

| AREA ID | MOBILE OBJECT ID | OBTAINING TIME AND DATE | COORDINATE | DURING STAY CARRYING ROUTE ID |
|---|---|---|---|---|
| AREA 1 | AGV1 | 10:34:54 | (17,1) | R4 |
| | AGV2 | 10:35:05 | (21,6) | R5 |
| | AGV3 | 10:35:20 | (29,8) | R10 |
| | ⋮ | ⋮ | ⋮ | ⋮ |

Fig. 9

Fig. 10

91

| SURROUNDING TEMPERATURES | LIFESPAN PRIORITY SPEED SET |
|---|---|
| Ha>Hb | speed set2 |
| Ha<Hb | speed set1 |

92

| CARRYING CAPACITIES | CARRYING EFFICIENCY PRIORITY SPEED SET |
|---|---|
| Ca>Cb | speed set2 |
| Ca<Cb | speed set1 |

Fig. 11

```
                        ┌─────────┐
                        │  Start  │
                        └─────────┘
                             │
                             ▼
              ┌──────────────────────────────┐
              │ ESTIMATE A MOBILE OBJECT THAT IS │
              │ HIGHLY LIKELY TO COLLIDE WITH THE │ ～ A1
              │ TARGET MOBILE OBJECT AT AN        │
              │ INTERSECTION                      │
              └──────────────────────────────┘
                             │
                             ▼
                    ╱────────────────╲        A2
        No        ╱                    ╲
      ◄───────── ◄  THERE IS THE MOBILE OBJECT  ►
                   ╲                    ╱
                    ╲────────────────╱
                             │ Yes
                             ▼
              ┌──────────────────────────────┐
              │ ESTIMATE A TIME AT WHICH THE  │
              │ MOBILE OBJECT WILL ARRIVE AT THE │ ～ A3
              │ INTERSECTION                  │
              └──────────────────────────────┘
                             │
                             ▼
              ┌──────────────────────────────┐
              │ ESTIMATE WHETHER THE MOBILE   │ ～ A4
              │ OBJECT CAN PASS               │
              └──────────────────────────────┘
                             │
                             ▼
                    ╱────────────────╲        A5
       Yes        ╱                    ╲
      ◄───────── ◄ THE MOBILE OBJECT CAN PASS ►
                   ╲                    ╱
                    ╲────────────────╱
                             │ No
                             ▼
              ┌──────────────────────────────┐
              │ CALCULATE THE SPEED SET IN    │
              │ ACCORDANCE WITH A COLLISION   │ ～ A6
              │ AVOIDANCE CONDITION           │
              └──────────────────────────────┘
                             │
                             ▼
              ┌──────────────────────────────┐
              │ OBTAIN THE TEMPERATURE        │ ～ A7
              │ INFORMATION                   │
              └──────────────────────────────┘
                             │
                             ▼
                    ╱────────────────╲        A8
       Yes        ╱  TEMPERATURE IS   ╲       No
    ◄──────────◄ HIGHER THAN OR EQUAL TO THE►─────────►
                 ╲    THRESHOLD      ╱
                  ╲────────────────╱
```

┌──────────────────────────┐          ┌──────────────────────────────┐
│ SELECT A SPEED SET THAT  │ ～ A9     │ SELECT A SPEED SET THAT PRIORITIZES │ ～ A10
│ PRIORITIZES THE LIFESPAN │          │ THE CARRYING EFFICIENCY        │
└──────────────────────────┘          └──────────────────────────────┘

```
                             ▼
              ┌──────────────────────────────┐
              │ GENERATE INSTRUCTION INFORMATION │ ～ A11
              └──────────────────────────────┘
                             │
                             ▼
              ┌──────────────────────────────┐
              │ TRANSMIT THE INSTRUCTION      │ ～ A12
              │ INFORMATION                   │
              └──────────────────────────────┘
                             │
                             ▼
                        ┌─────────┐
                        │   End   │
                        └─────────┘
```

Fig. 12

1101

| SURROUNDING TEMPERATURE | REMAINING BATTERY LEVEL PRIORIEY SPEED SET |
|---|---|
| Sa>Sb | speed set1 |
| Sa<Sb | speed set2 |

Fig. 13

```
                          ( Start )
                              │
                              ▼
           ┌──────────────────────────────────┐
           │ ESTIMATE A MOBILE OBJECT THAT IS  │
   ┌──────▶│ HIGHLY LIKELY TO COLLIDE WITH THE │~ A1
   │       │   TARGET MOBILE OBJECT AT AN      │
   │       │          INTERSECTION             │
   │       └──────────────────────────────────┘
   │                          │
   │                          ▼
   │  No              ◇─────────────────◇  A2
   │ ◀───────────────   THERE IS THE MOBILE OBJECT
   │                  ◇─────────────────◇
   │                          │ Yes
   │                          ▼
   │       ┌──────────────────────────────────┐
   │       │ ESTIMATE A TIME AT WHICH THE      │
   │       │ MOBILE OBJECT WILL ARRIVE AT THE  │~ A3
   │       │          INTERSECTION             │
   │       └──────────────────────────────────┘
   │                          │
   │                          ▼
   │       ┌──────────────────────────────────┐
   │       │ ESTIMATE WHETHER THE MOBILE       │~ A4
   │       │         OBJECT CAN PASS           │
   │       └──────────────────────────────────┘
   │                          │
   │                          ▼
   │  Yes             ◇─────────────────◇  A5
   └───────────────   THE MOBILE OBJECT CAN PASS
                      ◇─────────────────◇
                              │ No
                              ▼
           ┌──────────────────────────────────┐
           │ CALCULATE THE SPEED SET IN        │
           │ ACCORDANCE WITH A COLLISION       │~ A6
           │      AVOIDANCE CONDITION          │
           └──────────────────────────────────┘
                              │
                              ▼
           ┌──────────────────────────────────┐
           │ OBTAIN THE TEMPERATURE            │
           │ INFORMATION AND REMAINING         │~ A7'
           │   BATTERY LEVEL INFORMATION       │
           └──────────────────────────────────┘
                              │
                              ▼
                      ◇─────────────────◇  A8'
          Yes          TEMPERATURE IS          No
      ◀────────   HIGHER THAN OR EQUAL TO THE  ────────▶
                       THRESHOLD
                      ◇─────────────────◇
```

THE REMAINING BATTERY LEVEL IS HIGHER THAN OR EQUAL TO THE THRESHOLD  ~ B1

THE REMAINING BATTERY LEVEL IS HIGHER THAN OR EQUAL TO THE THRESHOLD  ~ B2

SELECT A SPEED SET THAT PRIORITIZES THE LIFESPAN  ~ A9

SELECT A SPEED SET THAT PRIORITIZES THE CARRYING EFFICIENCY  ~ A10

SELECT A SPEED SET THAT PRIORITIZES THE REMAINING BATTERY LEVEL  ~ B3

GENERATE INSTRUCTION INFORMATION  ~ A11

TRANSMIT THE INSTRUCTION INFORMATION  ~ A12

( End )

Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110295496 A1
- JP 2017117328 A
- US 6246932 B1
- JP 2018129028 A
- JP 2006113687 A